# EUROPEAN PATENT SPECIFICATION

(11) **EP 3 635 665 B1**
(45) Date of publication and mention of the grant of the patent: **13.03.2024**
(21) Application number: 18813501.6
(22) Date of filing: 06.06.2018
(51) Int. Cl.: H04L 9/00, H04L 9/32, G06Q 20/02, G06Q 20/10

(54) **LINKED MULTIPLE BLOCKCHAIN SYSTEM**
VERKNÜPFTES MEHRFACH-BLOCKCHAIN-SYSTEM
SYSTÈME À MULTIPLES CHAÎNES DE BLOCS LIÉES

(30) Priority: 06.06.2017 US 201762515991 P
(43) Date of publication of application: 15.04.2020
(73) Proprietor: Visa International Service Association, San Francisco, CA 94128-8999 (US)
(72) Inventor: CERVENKA, Karen, Belmont, CA 94002 (US); WAGNER, Kim, Sunnyvale, CA 94087 (US)
(74) Representative: EIP
(86) International application number: PCT/US2018/036318
(87) International publication number: WO 2018/226868

(56) References cited:
- WO-A1-2016/161073
- US-A1- 2015 371 224
- US-A1- 2016 342 959
- US-A1- 2017 005 804
- US-A1- 2017 011 460
- US-A1- 2017 011 460
- Michele D'aliessi: "How Does the Blockchain Work? - Michele D'Aliessi - Medium", , 1 June 2016 (2016-06-01), XP055463700, Retrieved from the Internet: URL:https://medium.com/@micheledaliessi/ho w-does-the-blockchain-work-98c8cd01d2ae [retrieved on 2018-03-28]
- Adam Back ET AL: "Enabling Blockchain Innovations with Pegged Sidechains", , 22 October 2014 (2014-10-22), XP055392256, Retrieved from the Internet: URL:https://blockstream.com/sidechains.pdf [retrieved on 2017-07-19]
- Franco Pedro: "Understanding Bitcoin Cryptography, engineering, and economics", , 1 January 2015 (2015-01-01), pages 1-291, XP055467603, ISBN: 978-1-119-01915-2 Retrieved from the Internet: URL:http://porn.jules-aubert.info/cul/humb le_ebooks/Bitcoin_Blockchain_Cryptocurrenc y/understanding_bitcoin.pdf [retrieved on 2018-04-16]
- WENTING LI ET AL: "Towards Scalable and Private Industrial Blockchains", PROCEEDINGS OF THE ACM WORKSHOP ON BLOCKCHAIN, CRYPTOCURRENCIES AND CONTRACTS, 2 April 2017 (2017-04-02), pages 9-14, XP055397747, DOI: 10.1145/3055518.3055531 ISBN: 978-1-4503-4974-1
- MICHELE D' ALIESSI: "How Does the Blockchain Work?", OneZero , 1 June 2016 (2016-06-01), pages 1-16, XP055463700, Retrieved from the Internet: URL:https://medium.com/s/story/how-does-th e-blockchain-work-98c8cd01d2ae

## Description

### BACKGROUND

In today's technological environment, a user may interact with a variety of computer systems to initiate a transaction, which may include any exchange or interaction between two or more entities (e.g., between the user and a resource provider). The transaction can include the exchange of specific resources, goods, services, financial instruments, access (e.g., to a secure resource or area), and so forth.

Michele D'aliessi: How Does the Blockchain Work? - Michele D'Aliessi Medium" provides an introduction to bitcoin and blockchain in general. A transaction exchange is described in which a user broadcasts a message to the network that says the amount of Bitcoins in their account should go down by a certain BTC, and the amount of the receiver's account should go up by the same quantity. Each node in the network will receive the message and apply the requested transaction to their copy of the ledger, thus updating the account balances.

However, the contractual obligations in the transaction may not all occur simultaneously. For example, a user interacting with a computer system to purchase coffee may actually be exchanging a promise to pay for the coffee, since the user may receive the coffee before the transaction clears and the coffee vendor receives payment for the coffee. The coffee vendor does not receive payment until the transaction is settled and the funds have been transferred into the vendor's account. In a conventional system, the payment can take anywhere from 24 hours up to three days to process a payment. These delays in transaction settlement are undesirable when considering the risks faced by transaction parties.

### BRIEF SUMMARY

Aspects of the present invention are defined by the appended independent claims. The present disclosure contemplates embodiments of methods and computing systems associated with real-time settlement using a distributed ledger, such as a blockchain ledger. These embodiments may be further directed to a server computer comprising a processor and a memory coupled to the processor. The memory can store instructions, executable by the processor, for implementing the methods described herein. These and other embodiments of the invention are described in further detail below.

In order to facilitate real-time settlement, a computing system may include a first plurality of nodes hosting a first blockchain ledger. This first blockchain ledger records transactions between a first set of users that have all deposited (e.g., funds) into a first pool account. In some cases, the users may be banks or financial entities, and each user may have their own individual set of customers. The first blockchain ledger may also record deposits and withdrawals of funds associated with each user in the first set of users. By recording transactions, deposits, and withdrawals associated with each user in the first set of users, the first blockchain ledger can also be used to record and track the account values associated with each user. Furthermore, the first blockchain ledger can also be used to record and track the current total value of the first pool account, which will initially be the aggregate value of all the deposits from the first set of users.

In some embodiments, there may be additional blockchain ledgers that are each associated with additional pool accounts. For instance, there may be a second plurality of nodes hosting a second blockchain ledger. This second blockchain ledger records transactions, deposits, and withdrawals of funds associated with each user in a second set of users that have all deposited (e.g., funds) into a second pool account. Like the first blockchain ledger, the second blockchain ledger also records and tracks the current total value of the second pool account, which will initially be the aggregate value of all the deposits from the second set of users.

In some embodiments, there may be a main blockchain ledger. For instance, there may be a third plurality of nodes hosting a main blockchain ledger. In some embodiments, the main blockchain ledger may record changes in the current total value of the various pool accounts, such as the current total value of the first pool account and the current total value of the second pool account. This can be implemented in various ways. The third plurality of nodes may be configured to periodically obtain the current total value of the first pool account from the first blockchain ledger and the current total value of the second pool account from the second blockchain ledger, and then the third plurality of nodes may update the main blockchain ledger with those retrieved values. In other cases, the first plurality of nodes and the second plurality of nodes may provide updates to the third plurality of nodes for any changes to the current total value of the first pool account and the current total value of the second pool account (e.g., resulting from transactions associated with users in the first set of users or the second set of users).

In some embodiments, a node of the first plurality of nodes hosting the first blockchain ledger may receive a transaction. As previously mentioned, the first blockchain ledger may record transactions between the first set of users associated with the first pool account, for which each user of the first set of users deposited funds for settlement into the first pool account. In some embodiments, the first blockchain ledger may record, for each transaction between the first set of users, a payer, a payee, and a transaction amount.

The received transaction may be from a first user of the first set of users to a second user of the first set of users for a first amount. The node of the first plurality of nodes may verify that the received transaction is capable of taking place by checking the first blockchain ledger (e.g., to determine the account value associated with the first user). In some embodiments, verifying that the transaction is capable of taking place includes checking the first blockchain ledger for a history of transactions associated with the first user. In some embodiments, verifying that the transaction is capable of taking place includes checking an account value associated with the first user. This account value may be an ongoing count that is updated in real-time as the first user carries out transactions, deposits, and withdrawals of funds. The node of the first plurality of nodes may then update the first blockchain ledger with the transaction to include a block with data relating to the first transaction.

In some embodiments, the node of the first plurality of nodes may determine that the transaction reduces an account value associated with the first user below a first threshold and then send a communication to the first user to deposit additional funds into the first pool account. Similarly, in some embodiments, the node of the first plurality of nodes may determine that the transaction increases an account value associated with the second user above a second threshold and then send a communication to the second user to withdraw funds from the first pool account.

In some embodiments, the node of the first plurality of nodes hosting the first blockchain ledger may receive a second transaction from the first user of the first set of users to a third user that did not deposit funds for settlement into the first pool account. The node of the first plurality of nodes may verify that the second transaction is capable of taking place by checking the first blockchain ledger (e.g., to determine the account value associated with the first user). In some embodiments, verifying that the transaction is capable of taking place includes checking the first blockchain ledger for a history of transactions associated with the first user. In some embodiments, verifying that the transaction is capable of taking place includes checking an account value associated with the first user. This account value may be an ongoing count that is updated in real-time as the first user carries out transactions, deposits, and withdrawals of funds. Upon verification, the node of the first plurality of nodes may then communicate the second transaction to another plurality of nodes associated with another blockchain ledger, such as communicating to a second plurality of nodes hosting a second blockchain ledger.

In some embodiments, the main blockchain ledger may obtain information from the other blockchain ledgers and be used to facilitate real-time settlement between users of different pools. For instance, any entity managing or hosting the main blockchain ledger (e.g., a node of a plurality nodes) may receive a transaction between a first user to a second user for a first amount. However, rather than both the first user and the second user having deposited into the same pool account, the first user deposited funds for settlement into a first pool account and the second user deposited funds for settlement into a second pool account.

The transaction can be verified to determine that it is capable of taking place by checking an account value associated with the first user at the first pool account. In some embodiments, the main blockchain ledger may keep track of the account value associated with the first user and receive periodic updates from a first blockchain ledger associated with the first pool account about any changes to the account value associated with the first user. This first blockchain ledger will record transactions between users that deposited funds for settlement into the first pool account and can be used to track changes in account value for those users, including the first user. In other embodiments, the main blockchain ledger may request the account value associated with the first user from one of the nodes of a first plurality of nodes hosting the first blockchain ledger that is associated with the first pool account.

In some embodiments, transactions between users of different pools will affect the account values associated with those users, as well as the current total value of those pools. For instance, the current total value of the first pool and the current total value of the second pool will both change as funds are transferred from the first user at the first pool to the second user at the second pool. Once it is determined the transaction can take place, a first communication can then be sent to the first plurality of nodes hosting the first blockchain ledger to instruct the first plurality of nodes to update the first blockchain ledger to include a decrease in the account value associated with the first user at the first pool account by the first amount, which may also decrease the current total value of the first pool. A second communication can also be sent to a second plurality of nodes hosting a second blockchain ledger. This second blockchain ledger will record transactions between users that deposited funds for settlement into the second pool account and can be used to track changes in account value for those users, including the second user. The second communication will instruct the second plurality of nodes to update the second blockchain ledger to include an increase in an account value associated with the second user at the second pool account, which may also increase the current total value of the second pool.

In some embodiments, the first pool account and the second pool account may be associated with different currencies. For instance, the first user may have deposited a first type of currency (e.g., USD) into the first pool account, which is associated with users from the United States. The second user may have deposited a second type of currency (e.g., CAD) into the second pool account, which is associated with users from Canada. The account value for the second user that is recorded by the second blockchain ledger may be tracked in CAD, and thus, to receive the first amount being sent in the transaction, the second user may actually have to receive the CAD equivalent to the first amount. Accordingly, in some embodiments, any entity managing or hosting the main blockchain ledger (e.g., a node of a plurality nodes) may determine a currency associated with the second pool account and convert the first amount into a second amount based on the determined currency. In this situation, the second communication will further instruct the second plurality of nodes to update the second blockchain ledger to include the increase in the account value associated with the second user at the second pool account by the second amount (e.g., the CAD equivalent to the first amount).

In some embodiments, there may be a currency account at each of the pools involved in the transaction. The transactions, deposits, and withdrawals of funds for each currency account may also be tracked in the corresponding blockchain ledger. For example, the first pool may have a first currency account and the second pool may have a second currency account. In such cases, when a first user of the first pool transacts with a second user of the second pool to send a first amount, funds from the account of the first user need not be directly transferred to the account of the second user. Instead, a transaction can be recorded in the first blockchain ledger associated with the first pool indicating the first amount is to be transferred from the first user to the first currency account of the first pool. At the same time, the second blockchain ledger associated with the second pool can record a corresponding transaction in which the first amount is sent from the second currency account of the second pool to the account of the second user. In order to implement the recording of these transactions, in some embodiments, the first communication sent to the first plurality of nodes hosting the first blockchain ledger will further instruct the first plurality of nodes to update the first blockchain ledger to include a corresponding increase in a currency account value at the first pool account by the first amount. In such embodiments, the second communication sent to the second plurality of nodes hosting the second blockchain ledger will further instruct the second plurality of nodes to update the second blockchain ledger to include a corresponding decrease in a currency account value at the second pool account by the second amount.

In the previous example, the current total values of the first pool account and the second pool account would not change. However, if the account value of a particular currency account drops too low, additional funds may need to be deposited into that currency account which would increase the current total value of the corresponding pool account. Similarly, the current total value of the pool account would decrease if funds are withdrawn from the corresponding currency account at the pool. In some embodiments, when a currency account at a pool account has too low or too high of an account value, the nodes hosting the corresponding blockchain ledger may provide a communication to a custodian of the pool account to fix that issue.

Thus, in the previous example, the custodian of the first currency account may receive a communication that the currency account value at the first pool account is above a first threshold and withdraw funds from the first currency account at the first pool account to bring the currency account value below the first threshold. Similarly, the custodian of the second pool account may receive a communication that the currency account value at the second pool account is below a second threshold and deposit funds into the second currency account at the second pool account to bring the currency account value above the second threshold.

### BRIEF DESCRIPTION OF THE DRAWINGS

FIG. 1 illustrates a system diagram for a distributed ledger settlement system, in accordance with embodiments of the present disclosure.
FIG. 2 illustrates a blockchain implementation for distributed ledgers used in the distributed ledger settlement system, in accordance with embodiments of the present disclosure.
FIG. 3 illustrates an example implementation for the distributed ledger settlement system, in accordance with embodiments of the present disclosure.
FIG. 4 illustrates an example implementation for the distributed ledger settlement system, in accordance with embodiments of the present disclosure.
FIG. 5 illustrates an example diagram of blocks in a blockchain ledger for the distributed ledger settlement system, in accordance with embodiments of the present disclosure.
FIG. 6 illustrates an example diagram of blocks in a blockchain ledger for the distributed ledger settlement system, in accordance with embodiments of the present disclosure.
FIG. 7 illustrates an example diagram of how transactions may be verified in a distributed ledger settlement system, in accordance with embodiments of the present disclosure.
FIG. 8 illustrates a step diagram for an example cross-pool transaction using the distributed ledger settlement system, in accordance with embodiments of the present disclosure.

### DETAILED DESCRIPTION

### Introduction

As previously discussed, transactions are often settled after a transaction takes place. Settlement involves the actual, physical delivery of funds and occurs after a transaction has cleared, and it may sometimes occur much later. For example, the customers of two different financial institutions (e.g., banks) may transact with each other throughout the day. As the transactions clear, the customer account balances within those financial institutions may be updated. However, there has not actually been a transfer of payment between the financial institutions until settlement occurs. For example, at the end of the day, the net flow of funds between various financial institutions may be determined by aggregating the many transactions between their customers that occurred during the day. Those differences are then settled, often by electronic funds transfer (in the U.S., a bank wire transfer made through the Federal Reserve's Fedwire system). Thus, settlement does not occur on a per-transaction basis, but rather on an aggregate of transactions.

The interbank settlement of funds between the various financial institutions is commonly based on an centralized ledger for recording those transactions, and the ledger provides subtotals for thousands of financial institutions around the world. Funds are then commonly moved between the various financial institutions in the form of a fiat currency or another expungable type of currency. However, this process is slow and is only performed at the end of the day once all the transactions have been made.

New real-time payment (RTP) schemes have been introduced to speed up this process. These new real-time payment schemes post/net transactions against funds that have been pre-funded by the various financial institutions. As long as a financial institution has a positive balance available, transactions are debited or credited from that balance. If the balance is insufficient, then the financial institution deposits additional funds (e.g., with the central bank) to increase the balance. The primary benefit of a RTP system is that payees in a transaction can receive immediate access to funds sent by payors, as the financial institution implementing the RTP system can provide the payee with funds from the pre-funded settlement account. However, such pre-funded RTP approaches also involve the actual movement of funds (e.g., in the form of a fiat currency), which further ties up the working capital of those financial institutions.

In the present disclosure, methods and systems are proposed for an approach involving a real-time payments distributed ledger settlement system that allows transactions to be quickly settled (e.g., on a per-transaction basis) without needlessly tying up the working capital of the financial institutions (e.g., users) that are participants of the system.

In the proposed RTP distributed ledger settlement system, the centralized ledger is replaced with one or more distributed ledgers, which can also be implemented using a conventional ledger or with blockchain technology. The distributed ledgers may be separate and distinct based on business needs, but at the same time the distributed ledgers may also interconnected with one another by being connected to a main ledger. Thus, the various ledgers may be arranged in a "chain of chains" that is usable for tracking and recording various transactions between different financial institutions. This "chain of chains" may be used to facilitate settlement between financial institutions associated with different ledgers (e.g., interbank settlement) and the physical movement of funds from a ledger to a fiat currency or other expungable type of currency (e.g., outside the blockchain).

This arrangement and implementation of ledgers allows funds to be converted quickly and easily between ledger balances and fiat currency, not just domestically but also internationally - allowing multicurrency, cross-border transactions to be quickly performed and settled without needlessly tying up the working capital of the financial institutions making those transactions. Instead of relying on pre-funding or collateral for settlement, the financial institutions can simply manage their own ledger balance. Furthermore, the ledgers can be implemented using blockchain technology which has built-in mechanisms to ensure that the data between the ledgers may automatically be synchronized, and the resulting framework may be able to address issues typically associated with the distributed ledgers, such as data privacy, connectivity, and the ability and willingness of financial institutions to manage a distributed ledger.

In particular, each ledger may be associated with a different pool account, which are provided by pool entities. Each pool account may be used to aggregate the deposits of one or more users. Each ledger is used to track and record in real-time the total aggregate value of the associated pool account, the transactions between users with deposits in that pool account, the balance for each user in that pool account, and any deposits or withdrawals by the users of that pool account. Transactions between users of the same pool account can be performed with the pool entity acting as a clearinghouse and without requiring traditional settlement (e.g., the physical movement of funds from one of the ledgers to a fiat currency or other expungable type of currency). Furthermore, each ledger may also be interconnected through a main ledger, which records the global fund flows among the various pool accounts and can be used to facilitate transactions between users of different pool accounts (or multicurrency, cross-border transactions, in practice).

### Terms and Definitions

Prior to discussing the details of some embodiments of the present invention, description of some terms may be helpful in understanding the various embodiments.

A "transaction" may comprise any exchange or interaction between two or more entities. The transaction can include the exchange of resources, goods, services, financial instruments, access (e.g., to a secure resource or area), and so forth. In some embodiments, the transaction may include the exchange of an asset or service in return for payment between a buyer or seller. "Settlement" of a transaction may refer to the delivery and fulfillment of contractual obligations associated with that transaction.

A "ledger" may be a tangible object (e.g., a principal book) or a digital object (e.g., a computer file, a database, a blockchain, and so forth) for recording transactions. As previously mentioned, such transactions can include the exchange of specific resources, goods, services, financial instruments, access (e.g., to a secure resource or area), and so forth. Some ledgers may record and total economic transactions, measured in terms of a monetary unit, between various accounts. The ledger may be a permanent summary of all transactions and their amounts, along with the beginning and/or ending monetary balance for each account involved in the transaction.

A "blockchain" may be a distributed database that is used to maintain a continuously growing list of records, which can be in the form of blocks. In some implementations, each block contains a timestamp and a link to a previous block. A blockchain is typically managed by a peer-to-peer network collectively adhering to a protocol for validating new blocks. Once recorded, the data in any given block cannot be altered retroactively without the alteration of all subsequent blocks and the collusion of the network. This allows the blockchain to serve as a distributed ledger for recording transactions between parties in a verifiable and permanent way.

A "node" may refer to any suitable data computation device or devices, which may commonly include a processor and memory for running applications, such as a blockchain client. In some embodiments, a node may be tasked with updating and maintaining a blockchain.

A "processor" may refer to any suitable data computation device or devices. A processor may comprise one or more microprocessors working together to accomplish a desired function. The processor may include CPU comprises at least one high-speed data processor adequate to execute program components for executing user and/or system-generated requests. The CPU may be a microprocessor such as AMD's Athlon, Duron and/or Opteron; IBM and/or Motorola's PowerPC; IBM's and Sony's Cell processor; Intel's Celeron, Itanium, Pentium, Xeon, and/or XScale; and/or the like processor(s).

A "memory" may be any suitable device or devices that can store electronic data. A suitable memory may comprise a non-transitory computer readable medium that stores instructions that can be executed by a processor to implement a desired method. Examples of memories may comprise one or more memory chips, disk drives, etc. Such memories may operate using any suitable electrical, optical, and/or magnetic mode of operation.

An "application" may be computer code or other data stored on a computer readable medium (e.g. memory element or secure element) that may be executable by a processor to complete a task.

A "ledger manager" may includeany suitable entity that operates a ledger for recording transactions between users associated with a pool account. In some embodiments, a ledger manager may also be a pool entity (e.g., such as a bank responsible for providing a pool account) or a business entity (e.g., a financial institution such as a transaction processor). In some embodiments, the ledger may be a distributed ledger (e.g., a blockchain ledger) and the term ledger manager may refer to any entity that operates one or more full nodes for managing the ledger and recording transactions between users associated with a pool account. In such embodiments, there may not be a single ledger manager and the ledger manager may actually consist of multiple entities. For example, there may be one or more entities (including users associated with the pool account) that operate one or more nodes that collectively manage and host the ledger based on an established framework. In some embodiments, pool accounts may be country-specific, and in such embodiments, the ledger manager for each pool account may be referred to as a "country ledger manager".

A "main ledger manager" may include any suitable entity that operates a main ledger for recording transactions between users associated with different pool accounts. In some embodiments, the main ledger manager may be a business entity (e.g., a financial institution such as a transaction processor). In some embodiments, the main ledger may be a distributed ledger (e.g., a blockchain ledger) and the term main ledger manager may refer to any entity that operates one or more full nodes for managing the main blockchain ledger, which interacts with the pool-specific blockchain ledgers in order to facilitate cross-pool transactions. In such embodiments, there may not be a single main ledger manager and the main ledger manager may actually consist of multiple entities. For example, there may be one or more entities that operate one or more nodes that collectively manage and host the main ledger based on an established framework. In some embodiments, pool accounts may be country-specific, and in such embodiments, the main ledger manager may be referred to as a "global ledger manager" as it manages a global blockchain ledger. In some embodiments, the main ledger manager may also be the ledger manager for one or more of the ledgers associated with the pool accounts.

A "user" may refer to any entity that may participate as a party to a transaction and deposits funds with a pool entity (e.g., into a pool account). Although the term user may include any individual that has deposited funds into a pool account, for the purposes of clarity and consistency, the users described in the examples herein primarily refer to a business entity, such as a bank, that has deposited funds with the pool entity. In some embodiments, these users may even operate one or more nodes hosting the blockchain ledger associated with the corresponding pool account. These users may have customers (e.g., an individual that does banking with the user). In some embodiments, the real-time payments distributed ledger settlement system can also facilitate transactions between the customers of two different users by recording the transfer of funds between those two users.

A "pool entity" may be any business entity (e.g., a bank) that issues and maintains a pool account for its users (e.g., one or more entities). In some embodiments, a pool account may be associated with a particular country, and the users associated with the pool account may have funds in the pool account in the currency of that country. In some embodiments, the pool entity may be also be a "settlement entity" that is responsible for handling settlement with the individual users in that pool account.

A "central bank" may refer to a country's centralized bank or any other entity responsible for the settlement funding mechanism in a country. For example, the Fed is responsible for settlement funding in the United States.

A "currency account" is an account in a pooled account specifically used to facilitate cross-pool transactions (e.g., transactions between users with accounts at different pools).

A "custodian of a currency account" may be any business entity (e.g., a bank or transaction processor) that deposits and maintains funds into a currency account in a pool account. In some embodiments, the same custodian can maintain currency accounts at many, or even all, of the pool accounts in order to facilitate ease of settlement. In some of embodiments, the custodian may also be the main ledger manager and/or the ledger manager of one or more pool accounts.

It should be noted that many of the roles performed by the different entities described above are not mutually exclusive, and thus, can be performed by a single entity. For instance, one entity may be the custodian of the currency accounts at all the pool accounts while also managing the main blockchain ledger and the blockchain ledgers associated with all pool accounts. Thus, any and all of the roles could be established at a pool entity (e.g. bank), a central bank, a transaction processor (a third party providing settlement services), a ledger manager (e.g., a country ledger manager), a main ledger manager (e.g., a global ledger manager), and currency account custodian, unless stated otherwise.

### Figures

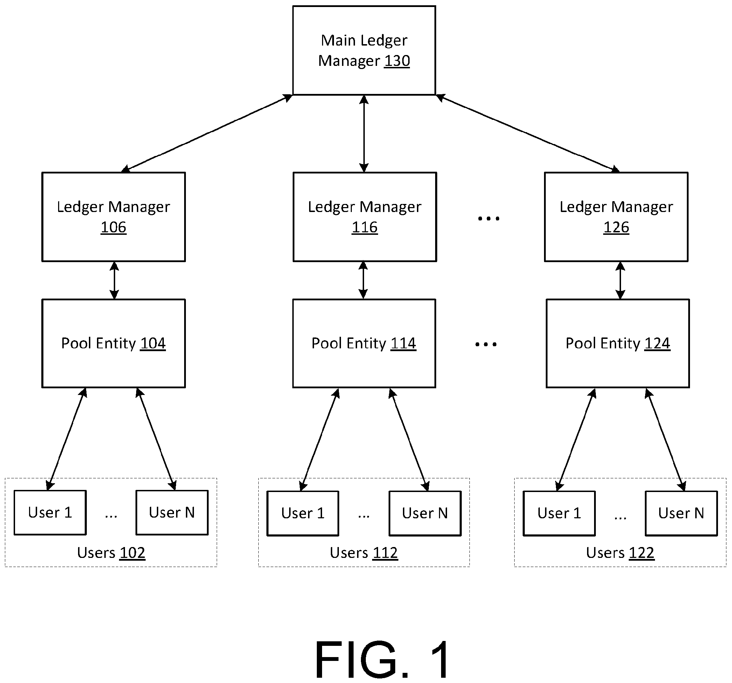

FIG. 1 illustrates a system diagram for a distributed ledger settlement system, in accordance with embodiments of the present disclosure.

In various embodiments, there may be any number of ledger managers and/or pool entities. For the sake of simplicity, three ledger managers are shown with each manager in electronic communication with a single pool entity. In practice, a ledger manager may communicate with multiple pool entities, or they could be multiple ledger managers for each pool entity.

In some embodiments, one or more users 102, including user 1 through user N, may deposit funds with a pool entity 104. Similarly, one or more users 112 may deposit funds with a pool entity 114, and one or more users 122 may deposit funds with a pool entity 124. Each pool entity may provide a pool account that aggregates the funds deposited by its users. For example, all of the users 102 may deposit funds into one pool account of the pool entity 104. In some embodiments, a pool entity may be a central bank (e.g., the Federal Reserve) and the users may be financial institutions (e.g., commercial banks) that deposit funds with the pool entity. In some embodiments, those funds may be stored by the pool entity (e.g., the central bank may physically store those funds).

In some embodiments, transactions between users with deposits in the same pool account may be managed and facilitated by a ledger manager. For example, transactions between users 102 with deposits in the pool account provided by the pool entity 104 may be managed and facilitated by the ledger manager 106. The ledger manager 106 may maintain a ledger for recording the transactions between the users 102 and the amount of funds available to each of the users 102. The ledger manager 116 may do the same for users 112, while the ledger manager 126 may do the same for users 122. In some embodiments, a ledger manager may be one or more financial institutions tasked with maintaining the ledger (e.g., distributed database).

In some embodiments, each ledger manager may be any entity or set of entities suitable for maintaining a ledger. In some embodiments, the ledger may be a digital object (e.g., a computer file, distributed database, blockchain, and so forth). In such instances, a ledger manager could be an entity or set of entities that includes one or more computer systems (nodes) to manage, handle, and update the ledger and record transactions between users of that ledger. For example, the ledger manager 106 may include a set of nodes that records transactions between the users 102 as blocks in a blockchain.

In some embodiments, each ledger manager may be in communication with a main ledger manager 130 that is tasked with managing a main ledger. In some embodiments, the main ledger manager 130 may be any entity or set of entities suitable for maintaining the main ledger. In such instances, the main ledger manager could be an entity or set of entities that maintain one or more computer systems to store, handle, and update the main ledger. In some embodiments, the main ledger manager 130 may be distinct from the other ledger managers, while in some embodiments, the roles of the main ledger manager 130 and each of the other ledger managers may be performed by a singular entity.

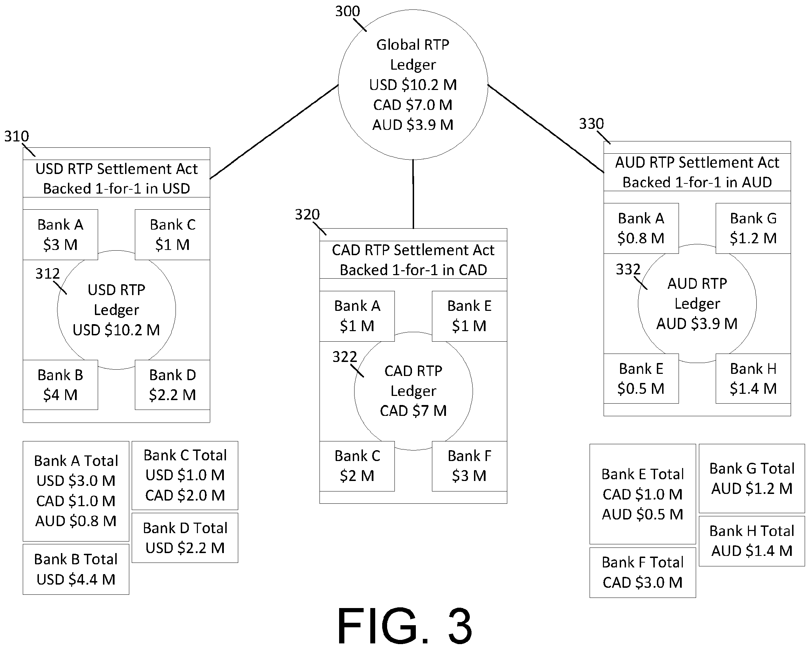

In some embodiments, the main ledger may also be in blockchain format (e.g., a distributed database), and the main ledger manager 130 may be one or more entities that provide a set of computer systems (e.g., nodes) for managing the main ledger. The main ledger may be associated with each of the ledgers managed by the ledger managers. For example, the main ledger may include transaction information from the ledgers maintained by the ledger manager 106, the ledger manager 116, and the ledger manager 126. Discussion of the role of each ledger and the main ledger is provided in regards to FIG. 3.

In some embodiments, each ledger and the entities involved with the associated pool account may belong to a certain jurisdiction (e.g., a country or region), resulting in separate ledgers for each jurisdiction. For example, there may be a ledger specifically associated with the U.S. that records transactions in U.S. dollars between users that deposited into a U.S. based pool account. In this scenario, the main ledger can be used to facilitate cross-border and multi-currency transactions between users associated with different pool accounts and ledgers (e.g., a transaction between a user of the U.S. pool account and a user of a Canada pool account). An example of such an embodiment is provided in FIG. 3.

Data access and security across the ledgers may be of concern, such that various entities are only permitted visibility to data in the ledgers that they are allowed access to. For instance, a user in a pool account may be permitted to use the framework of a ledger corresponding to that pool account in order check their own account balance within the pool account, but that same user may not have access to the account balances of other users in that pool account or the account balances of users in other pool accounts (e.g., other ledgers).

Data access and security across the ledgers may be of concern, such that various entities are only permitted visibility to data in the ledgers that they are allowed access to. For instance, a user in a pool account may be permitted to use the framework of a ledger corresponding to that pool account in order check their own account balance within the pool account, but that same user should not be granted access to the account balances of other users in that pool account or the account balances of users in other pool accounts (e.g., other ledgers). Furthermore, the level of data visibility for different individuals associated with an entity can be different (e.g., higher ranking employees should have more visibility).

Each ledger is a private permission based blockchain ledger that utilizes public key infrastructure (PKI) for encryption and role-based access control. Role-based access allows for different individuals associated with an entity that perform different roles to have different data visibility based on their role, such that they can perform their assigned role and actions and only those actions. These roles and levels of data access should be assignable through the framework of the ledger (e.g., profile management). An individual who has a participant profile management role within an entity should be able to add, change and delete individuals within their own organization and configure their data access. Similarly, an individual in the finance department of an entity (e.g., a user deposited in the pool account) should be able to see the transactions and balances of that entity, but not transactions or balances from other entities. To establish these roles, issued participants are provided with public key certificates with which they could access permitted data from the ledger.

There may be a certificate authority (CA) to manage the digital certificates electronically. Furthermore, access to data contained in the ledgers and the main ledger may be defined by the various entities associated with the data or by the data owner through a framework dashboard. In some embodiments, the framework (e.g., "chaincode") or software associated with the ledger may also be set or configured with various business or transaction rules that would be enforced and govern the transactions on the ledger. Some examples of business rules would include the automatic execution of commands such as top-ups (as well as setting the threshold for top-ups) or validity checks, as well as the encryption taken place for confidentiality. Examples of how data access and business or transaction rules may be configured are provided in regards to FIG. 3.

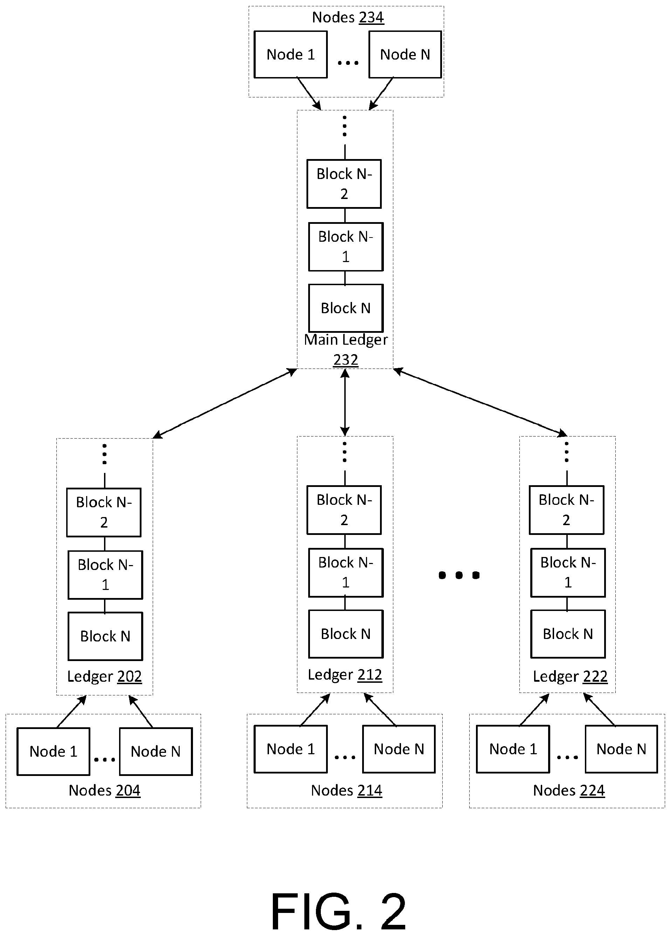

FIG. 2 illustrates a blockchain implementation for distributed ledgers used in the distributed ledger settlement system, in accordance with embodiments of the present disclosure.

In some embodiments, there may be one or more ledgers, such as a ledger 202, a ledger 212, and a ledger 222. Three ledgers are shown in the figure for simplicity, but there may be any number of ledgers. Each of these ledgers may be stored in blockchain format, which is a distributed database that is used to maintain a continuously growing list of records called blocks. For example, the ledger 202 may have any number of blocks in the blockchain with Block N being the current block, Block N-1 being the block preceding Block N, Block N-2 being the block preceding Block N-1, and so forth.

Since blockchain is a distributed database that is typically managed by a peer-to-peer network, each ledger may be managed by a set of nodes. For instance, the ledger 202 may be managed by any number of nodes in nodes 204, including Node 1 through Node N (collectively, nodes 204). The nodes 204 may be configured to maintain and update the blockchain of ledger 202, such as by adding additional blocks to the chain. Similarly, ledger 202 may be managed by any number of nodes in nodes 214, while ledger 222 may be managed by any number of nodes in nodes 224. In some embodiments, the blockchains may be public and information contained in the blocks may be easily viewed. For example, a user who deposits funds into a pool account may be able to access the ledger for the pool account and view the account values or net positions for other users that have funds in the pool account. In some embodiments, the blockchains may be private and blocks may be updated or viewed only by trusted nodes.

Each block of a ledger may contain information recorded for one or more transactions. For example, ledger 202 could be associated with a pool account (described further in regards to FIG. 3) that holds the deposits of multiple users. The blockchain of the ledger 202 could be updated with blocks containing transaction information for transactions between those users, such as transaction amounts, transaction parties/accounts, the values available to various accounts, and the total aggregate value of all the accounts (e.g., the pool value).

In some embodiments, the one or more ledgers (including ledger 202, ledger 212, and ledger 222) may be associated with a main ledger 232. The main ledger 232 may also be stored in blockchain format and have any number of blocks in the blockchain, with Block N being the current block, Block N-1 being the block preceding Block N, Block N-2 being the block preceding Block N-1, and so forth. The main ledger 232 may be managed by any number of nodes in nodes 234, including Node 1 through Node N (collectively, nodes 234).

In some embodiments, the main ledger 232 may contain some, or all, of the information recorded in the blockchains of the ledgers associated with it (e.g., ledger 202, 212, and 222). The main ledger 232 may serve multiple purposes, such as to facilitate transactions between users of different ledgers (e.g., coordinating a transaction that impacts both ledger 202 and ledger 212). The main ledger 232 may be synched to the various ledgers associated with it, such that information in the most recent block of each ledger is reflected in the main ledger 232. This can be implemented in numerous ways. For example, nodes 204, 214, and 224 may update the main ledger 300 at the same time they respectively update the ledgers 212, 222, and 232. Alternatively, the nodes 204, 214, and 224 may coordinate with and provide the nodes 234 any transaction information recorded in the blockchains of the ledgers 212, 222, and 232 so that the nodes 234 can update the blockchain of the main ledger 232. Alternatively, the nodes 234 may periodically retrieve or analyze the most current blocks in the blockchains of the ledgers 212, 222, and 232 in order to obtain the transaction information needed to update the main ledger 232. The role of the main ledger 232 is described further in regards to FIG. 3.

FIG. 3 illustrates an example implementation for the distributed ledger settlement system, in accordance with embodiments of the present disclosure.

The figure depicts an example embodiment in which the division of the ledgers is based on various countries and currencies. In other words, with the exception of the main ledger, each of the ledgers is used to track transactions associated with one type of currency and the users in the country associated with that currency. Thus, for example, there may be a U.S. pool entity responsible for providing a U.S. pool account to U.S. users that settles with U.S. dollars. There may be also be a U.S. ledger manager for maintaining a U.S. ledger for recording the transactions associated with the users of this U.S. account, although the U.S. ledger manager and U.S. pool entity could be the same entity. It should be noted that the delineation of the ledgers does not necessarily have to be by currency and could be done in various ways based on business needs. For instance, each ledger could be associated with a different financial institution, such as one ledger for customers of Bank of America, another ledger for customers of Wells Fargo, and so forth. As another example, each ledger could be associated with a particular transaction scheme, such as one ledger used for SEPA transactions, and so forth.

In some embodiments, there may be a pool account 310 that is maintained by a pool entity. The pool account 310 may be associated with a particular type of currency, such as the U.S. dollar (USD). In some embodiments, the pool account 310 may be associated with a ledger 312 for recording transactions, account values, and the pool value (e.g., the total value of the pool account 310). This ledger 312 may be maintained and updated by a ledger manager.

As shown in the figure, various users (e.g., Bank A, Bank B, Bank C, and Bank D, and so forth) may deposit funds with the pool entity that maintains the pool account 310. Each of those users may deposit an amount of US dollars with the pool entity (e.g., into the pool account 310). For example, Bank A may deposit $3M USD into the pool account 310, Bank B may deposit $4M USD into the pool account 310, Bank C may deposit $1M USD into the pool account 310, and Bank D may deposit $2.2M USD into the pool account 310. Thus, the pool account 310 will contain all of the deposits from the users and the total account value of the pool account 310 (e.g., the pool value) will be equivalent to the sum of all those deposits. In this case, the pool account 310 will have a total account value of $10.2M USD.

As a more specific use example, the pool account 310 could be provided by the Federal Reserve (the pool entity), with various financial institutions (e.g., banks) that deposit funds with the Federal Reserve. The ledger 312 could be used to track transactions between all of these financial institutions that have deposited funds with the Federal Reserve.

However, the ledger 312 continually records individual account values associated with each user based on their deposits, any previous deposits, as well as any transactions that user may have made. Thus, any deposits made by the users may be added to that user's previous individual account value that was recorded in the ledger 312. If the users are depositing for the first time, such as in this case, then the ledger 312 would record $3M USD under Bank A's account value, $4M USD under Bank B's account value, $1M USD under Bank C's account value, and $2.2M USD under Bank D's account value. Thus, although the funds deposited by the users may be aggregated in the pool account 310, the ledger 312 would still track each user's deposit individually as if those users had deposited funds into their own respective accounts provided by the pool entity.

In some embodiments, there may be other pool accounts (besides the pool account 310) that are maintained by other pool entities. For instance, in some embodiments, there may be a pool account 320 that is maintained by a second pool entity. The pool account 320 may be associated with a different type of currency, such as the Canadian dollar (CAD). The pool account 320 may be associated with a ledger 322 for recording transactions, account values, and the pool value (e.g., the total aggregate value of the pool account 320).

As shown in the figure, various users (e.g., Bank A, Bank C, Bank E, and Bank F, and so forth) may deposit funds with the pool entity that maintains the pool account 320. Each of those users may deposit an amount of Canadian dollars with the pool entity (e.g., into the pool account 320). For example, Bank A may deposit $1M CAD into the pool account 320, Bank C may deposit $2M CAD into the pool account 320, Bank E may deposit $1M CAD into the pool account 320, and Bank F may deposit $3M into the pool account 320. Thus, the pool account 320 will contain all of the deposits from the users and the total account value of the pool account 320 (e.g., the pool value) will be equivalent to the sum of all those deposits. In this case, the pool account 320 will have a total account value of $7M USD.

The ledger 322 would similarly maintain a record of individual account values associated with each user based on their deposits, any previous deposits, as well as any transactions that user may have made. Thus, any deposits made by the users may be added to that user's previous individual account value that was recorded in the ledger 322. If the users are depositing for the first time, such as in this case, then the ledger 322 would record $1M CAD under Bank A's account value, $2M CAD under Bank C's account value, $1M CAD under Bank E's account value, and $3M CAD under Bank F's account value. Thus, although the funds deposited by the users may be aggregated in the pool account 320, the ledger 322 would still track each user's deposit individually as if those users had deposited funds into their own respective accounts provided by the pool entity.

Similarly, there could be another pool account 330 (and so forth) that is maintained by a third pool entity. The pool account 330 may be associated with a different type of currency, such as the Australian dollar (AUD). The pool account 330 may be associated with a ledger 332 for recording transactions, account values, and the pool value (e.g., the total aggregate value of the pool account 330).

As shown in the figure, various users (e.g., Bank A, Bank E, Bank G, and Bank H, and so forth) may deposit funds with the pool entity that maintains the pool account 330. Each of those users may deposit an amount of Australian dollars with the pool entity (e.g., into the pool account 320). For example, Bank A may deposit $0.8M AUD into the pool account 330, Bank E may deposit $0.5 AUD into the pool account 330, Bank G may deposit $1.2M AUD into the pool account 330, and Bank H may deposit $1.4M AUD into the pool account 330. Thus, the pool account 330 will contain all of the deposits from the users and the total account value of the pool account 330 (e.g., the pool value) will be equivalent to the sum of all those deposits. In this case, the pool account 330 will have a total account value of $3.9M AUD.

The ledger 332 would similarly maintain a record of individual account values associated with each user based on their deposits, any previous deposits, as well as any transactions that user may have made. Thus, any deposits made by the users may be added to that user's previous individual account value that was recorded in the ledger 322. If the users are depositing for the first time, such as in this case, then the ledger 332 would record $0.8M AUD under Bank A's account value, $0.5M AUD under Bank E's account value, $1.2M AUD under Bank G's account value, and $1.4M CAD under Bank H's account value. Thus, although the funds deposited by the users may be aggregated in the pool account 330, the ledger 332 would still track each user's deposit individually as if those users had deposited funds into their own respective accounts provided by the pool entity.

In some embodiments, the pool value for each pool account will typically not change as transactions are conducted between users associated with that pool account and will only change when those users deposit or withdraw funds from that pool account. For example, Bank A and Bank C are both users that have deposited with the pool entity that maintains the pool account 310 for transactions in US dollars. The ledger 312 records the deposits of both Bank A and Bank C and also provides updated individual account values for both Bank A and Bank C (e.g., $3M USD for Bank A and $1M USD for Bank C). However, it should be noted that Bank A and Bank C would not actually have individual accounts since their funds are pooled into the pool account 310, and the individual account values are actually representations of what funds would be available to either Bank A or Bank C if they had individual accounts (e.g., as in a traditional setup). In this example, if Bank A and Bank C enter into a transaction that results in a net transfer of $1M USD from Bank A to Bank C, then ledger 312 would be updated to record that transaction and the new individual account values for Bank A and Bank C. Bank A's account value maintained by the ledger 312 would reduce by $1M USD to become $2M USD, while Bank C's account value maintained by the ledger 312 would increase by $1M USD to become $2M USD. The pool value of the pool account 310 maintained by the ledger 312 would remain at $10.2M since the transaction involved a movement of funds that could be settled without additional deposits needing to be made. Thus, funds would be moved between users as if the pool entity was a clearinghouse.

However, if Bank A and Bank C had entered into a transaction that resulted in a net transfer of $4M USD from Bank A to Bank C, that would be a scenario in which the movement of funds could not be settled without additional deposits needing to be made. Since Bank A's individual account value is $3M USD, there would not be enough funds to support a transfer of $4M USD from Bank A's account. In some embodiments, Bank A would be notified that an additional $1M USD needs to be deposited in order to settle the transaction. Bank A could then deposit at least an additional $1M USD into the pool account 310, and Bank A's account value would be increased by that amount and recorded in the ledger 312 to allow for the transaction to be conducted. The pool value of the pool account 310 recorded in the ledger 312 would also be increased by that amount (e.g., a $1M USD deposit would result in the pool value increasing to $11.2M). Thus, for the purposes of stemming systemic risk, each user may be required to prefund and deposit with the pool account to place each user in a net positive position. The amount that each user may need to prefund may vary based on implementation. In some embodiments, some users (e.g., smaller financial institutions) may be instructed of a specific amount of balance that must be maintained. In some embodiments, some users (e.g., larger financial institutions) may not have explicit minimums on the balance that must be maintained as long as their account has enough funds to cover any transactions the users conduct.

However, in some other embodiments, the users or participants of the ledger 312 may be trusted and credit can be extended to them on faith. In such embodiments, the transaction may be conducted and ledger 312 would simply reduce Bank A's account value by $4M USD to become -$1M USD. Bank A would then be informed and would have to deposit sufficient funds at a later time to cover the balance.

At any time, any user could also withdraw funds from the pool account that they deposited into if they have a positive individual account balance as recorded by the ledger associated with that pool account. For example, if Bank A deposited $3M USD into the pool account 310 and conducted transactions with other users that resulted in Bank A's individual account value of $2M USD, then Bank A could withdraw up to $2M USD from the pool account 310. If, for instance, Bank A withdrew $1M USD from the pool account 310, then the pool entity that provides the pool account 310 would transfer $1M USD to Bank A from the pool account 310. The ledger 312 would be updated to reduce Bank A's individual account value by $1M USD and reduce the pool value of the pool account 310 by the same amount to $9.2M. In some embodiments, at a later time, the pool entity (e.g., providing the pool account 310) would provide settlement or the delivery of the fiat/digital currency to Bank A. This process allows the blockchain of the ledger 312 to be used to manage and record the flow of funds between users for the later settlement or conversion of funds into fiat/digital currency outside of the blockchain.

Thus, a user would be able deposit funds into the pool account as often as they would like by implementing the blockchain of the ledger into their own infrastructure. The user would also be able to withdraw funds from the pool account that they deposited into as often as they want, based on their own rules or procedures, so long as there is sufficient balance associated with that user to cover those withdrawals. For example, a user may dictate they only want $1M USD in balance at all times within the pool account 310 and may structure withdrawals so that funds above that amount are periodically withdrawn. Or the user may dictate that additional funds are to be deposited into the pool account if the account balance falls below X, or withdrawn from the pool account when the account balance becomes greater than Y. In other words, each user may be able to connect the ledger to their funding mechanisms in order to establish their own rules and procedures, which may define when and how funds are converted out of the ledger and into fiat/digital currency outside of the blockchain. This also makes it easier for the user to move funds to and from the pool entities (e.g., central banks) and this movement of funds would not have to incur additional wire fees.

In some embodiments, there may also be a main ledger 300 that is maintained by a main ledger manager. As will be discussed, the main ledger 300 may be used to implement global or multicurrency transactions. As shown in the figure, the main ledger 300 may be used to record transactions, account values, and/or pool values across multiple ledgers (and in this instance, multiple currencies). For example, the main ledger 300 may maintain records of the total account values of the pool account 310, the pool account 320, and the pool account 330. In some embodiments, the main ledger 300 may even maintain records of individual account values associated with each user for those pool accounts (e.g., after deposits, Bank A has account values of $3M USD, $1M CAD, and $0.8M AUD).

The main ledger 300 may be updated to reflect changes in pool values and any individual account values as transactions, deposits, and withdrawals occur. This can be implemented in numerous ways. For example, in one embodiment, the nodes managing the ledgers 312, 322, and 332 may update the main ledger 300 at the same time they update the ledgers 312, 322, 332. In one embodiment, the nodes managing the ledgers 312, 322, and 332 may instead inform the nodes managing the main ledger 300 when the ledgers 312, 322, and 332 are updated. In one embodiment, the main ledger 300 may be updated by pulling or retrieving information (e.g., about transactions) from the ledgers 312, 322, and 332 after those ledgers have been updated and using that information to update the main ledger 300 (e.g., by the nodes managing the main ledger 300). Thus, the main ledger 300 would record the various transactions and the movement of funds, but the main ledger manager would not participate in that transfer of funds. Instead, the main ledger manager is facilitating the transfer of funds without actually taking physical possession of funds.

In some embodiments, the main ledger 300 may be used to allow users to utilize funds across individual accounts they may have with various pool entities, such as to enable multicurrency transactions. For example, in the figure shown, Bank A may wish to transact with Bank E using Canadian dollars. This transaction may involve a transfer of $2M CAD from Bank A to Bank E and would normally be handled by the ledger 322. However, it can be seen that Bank A only has $1M CAD deposited with the pool account 320, which is insufficient for enabling the transaction. In this instance, funds could be retrieved from Bank A's US dollar account (containing $3M USD) maintained by ledger 312. To enable this, the main ledger manager (e.g., the nodes of the main ledger 300) may determine the current exchange rate from US dollars to Canadian dollars that will enable the transaction. For the sake of simplicity, assume that the exchange rate is 1:1. Thus, $1M USD from Bank A's funds with the pool account 310 would be converted into $1M CAD and added to Bank A's funds with the pool account 320. More specifically, the ledger 312 would be updated with Bank A's account value decreasing by $1M USD and the pool value of the pool account 310 would also decrease by $1M USD. The ledger 322 would be updated with Bank A's account value increasing by $1M CAD and the pool value of the pool account 320 would also increase by $1M CAD. The main ledger 300 would also be updated with these changes. The settlement of such a transaction could be implemented in various ways. In some embodiments, at a later time, there may be physical settlement of the transaction with the pool entity associated with the pool account 310 sending $1M CAD in physical currency to the pool entity associated with the pool account 320. In some embodiments, the main ledger manager may maintain pools of various currencies to cover these kinds of transactions. For instance, the main ledger manager may maintain a pool of currency in Canadian dollars to cover this transaction and settlement position with the pool entity (e.g., the Canadian bank) associated with the pool account 320.

Thus, the main ledger 300 may be used to perform cross-border, multicurrency transactions and settlement. The main ledger 300 can be used to manage the movement of funds between individual ledgers (e.g., between blockchains) like the movement of US currency to Canadian currency provided in the example. As pool entities (e.g., central banks) move to digital currencies, the ledger managers (e.g., the entities managing their distributed ledger) could implement this system and architecture with the digital currency of their pool entity and there would be greater visibility of transactions since they would all be recorded on the blockchains of the ledgers. This would be particularly useful for compliance requirements, such as for measures associated with Know Your Customer (KYC), Customer Identification Program (CIP), Office of Foreign Assets Control (OFAC) screening, and Anti-Money Laundering Laws (AML). As an example, since each transaction would be recorded in the blockchain of a ledger (such as the main ledger 300), it would be simple to filter all the transactions associated with a particular user in various countries or currencies in order to analyze the money flows for money laundering detection.

In some embodiments, the main ledger 300 may be used to allow for transactions to occur between users that are not deposited with the same pool account. For example, in the figure shown, Bank B has only deposited with the pool account 310 while Bank F has only deposited with the pool account 320. Bank B may still be able to transact with Bank F using the main ledger 300. For instance, if Bank B transacts with Bank F to transfer $1M CAD, the main ledger manager (e.g., the nodes of the main ledger 300) may determine the current exchange rate from US dollars to Canadian dollars that will enable the transaction. For the sake of simplicity, assume that the exchange rate is 1:1. Thus, $1M USD from Bank B's funds with the pool account 310 would be converted into $1M CAD and added to Bank F's funds with the pool account 320. More specifically, the ledger 312 would be updated with Bank B's account value decreasing by $1M USD and the pool value of the pool account 310 would also decrease by $1M USD. The ledger 322 would be updated with Bank F's account value increasing by $1M CAD and the pool value of the pool account 320 would also increase by $1M CAD. The main ledger 300 would also be updated with these changes. In some embodiments, at a later time, there may be physical settlement of the transaction with the pool entity associated with the pool account 310 sending $1M CAD in physical currency to the pool entity associated with the pool account 320.

It can be seen that when ledgers are divided up based on a jurisdiction, such as by country, this hierarchy of ledgers involving ledgers linked to a main ledger 300 may allow for faster interbank settlement in both domestic transactions (e.g., between users deposited in the same pool account) and cross-border transactions (e.g., between users of different pools) with fiat currencies that have high fungibility (e.g., funds that are not just posted to a ledger within the distributed ledger network but can also be easily converted/deposited into an account at a central bank and used for other financial instruments that require immediate funds).

In the case that the ledgers are blockchain ledgers, access to the various types of data within each ledger can be hierarchical and managed by the data owner. For instance, the main ledger manager may be considered the data owner of all of the data recorded in the main ledger 300. If the main ledger 300 tracks the pool value of the various pool accounts (pool accounts 310, 320, 330) but does not track the account values of individual users at the pool accounts, then the main ledger manager may make the pool value for a particular pool account that is recorded by the main ledger 300 viewable to only certain entities. For example, the main ledger manager may individually enable or disable access for the Central Bank in the United States, the pool entity for the pool account 310, and users of the pool account 310 (Banks A, B, C, and D) to see that the pool account 310 has a total pool value of $10.2 M USD. Thus, the main ledger manager could allow the Central Bank in the U.S. to see the pool value of the pool account 310 while restricting the Central Bank in Canada from viewing the pool value of the pool account 310.

Since in this example, the main ledger 300 does not track the account values of individual users at the pool accounts, it would be up to the individual users to grant access to the main ledger manager for that information. For instance, Bank A could allow the main ledger manager to view Bank A's individual account balance of $3M in the pool account 310, while Bank B may restrict the main ledger manager to view Bank B's individual account balance of $4M in pool account 310. However, the individual account balance for Bank A and Bank B would still be factored into the total pool value of $10.2M for the pool account 310, which would be provided to the main ledger manager. In some embodiments, the main ledger manager may utilize the pool values associated with the different pool accounts in order to fund and facilitate transactions (such as individual card transactions) in real-time.

In some embodiments, the ledgers (either for a pool account or the main ledger 300) may capture and record certain information associated with deposits, withdrawals, and each transaction during the settlement process, including an updated account balance for both the payor user and the payee user (e.g., the sending and receiving bank) with the transaction applied, the transaction amount, currency information associated with the transaction, any information about why the transaction was declined if it was declined during the settlement process, jurisdiction information (e.g., the U.S.), and a date and time stamp for the transaction. In some embodiments, the ledgers may also capture and record changes in the pool value resulting from deposits or withdrawals affecting the pool account. Any, or all, of this information recorded in ledgers at the country-level can also be communicated to the main ledger manager. Thus, the main ledger 300 can be used to record some or even all of the information recorded in the ledgers at the country-level.

In some embodiments, the main ledger 300 may also capture and record information associated with changes in the pool values of all the pool accounts, such as deposits or withdrawals affecting the pool value of the various pool accounts, as well as certain information associated with cross-pool transactions. This may include an updated account balance for both the payor user and the payee user with the transaction applied (unless the main ledger is not permitted visibility for individual user account balances) or at least an identification of the payor user and the payee user, the pool accounts associated with the payor user and the payee user, the transaction amount, currency information associated with the transaction, any information about why the transaction was declined if it was declined during the settlement process, jurisdiction information for the payor user and the payee user, and a date and time stamp for the transaction.

In some embodiments, these data access settings may be easily configured via a data access and security framework that the main ledger manager may establish for all of the entities and their associated individuals to operate within. This data access and security framework may allow entities to perform various administrative, profile management, and treasury management functions associated with facilitating settlement of transactions in real-time.

Some examples of administrative functions that can be performed using the data access and security framework include the ability to manage and support system level functions including software upgrades, connectivity, and so forth. There may be administrative functions associated with security, such as managing system security rules (e.g. passwords, login timeout, etc.), encryption keys, and digital security elements, (e.g. digital signing authorities, password resets, etc.). There may be administrative functions associated with audit, such as setting up and accessing system logs, reports (e.g., for performance, profile management, compliance, etc.), regulatory and legal compliance requirements, and source data. There may also be administrative functions associated with data classification, such as assigning classifications for the transaction and profile data at both a system and an organization level. For data classifications, this may include public, confidential, restricted and restricted personal information both at the system level and at an individual organization level.

Some examples of profile management functions that can be performed using the data access and security framework include the ability to change or configure data access settings applicable to different individuals associated with the entity, such as to provide different levels of data access to different roles within a company. However, these profile management functions may be restricted to certain individuals associated with the entity they are applicable to (e.g., each pool entity can only access their own profiles, the main ledger manager can only access its profile, etc.), and some functions may require higher level of access and commercially reasonable security procedures to complete profile management functions. As an example, a pool entity (e.g., a bank) or the main ledger manager may be able to establish roles within its organization at a regional, multi-regional, and global level. An individual with a role at a global level may be allowed access to more information than another individual with a role at a regional level. In some embodiments, the entity itself may establish various roles within its organization and define the types of data that could be available to each role. In some embodiments, the main ledger manager must establish new roles and define the types of data that could be available for each role. However, the other entities may be able to rename those roles to suit their need for data access within the entity.

There may also be profile management functions associated with the role within an entity to manage other individuals within the entity, such as the ability to add, change and delete individuals within the system and assign roles to other individuals. Entities may designate what levels of data classifications the individual would have access to and if they have read, change, delete privileges for each function. Some functions may require higher level of access and commercially reasonable security procedures to add or change individuals.

There may also be profile management functions for financial oversight associated with the role of overseeing financial transactions, such as the establishment of rules associated with transactions involving the entity. Such rules may include transaction size limits, tolerance rates, and alerts (e.g. when a currency account balance goes above/below thresholds, when a velocity threshold is reached, when a large dollar transaction is performed, the confirmation of top-ups/drawdowns/funds transfers, when FX rate information update timing thresholds have been exceeded, and so forth). The rules may also include standing orders and scheduling of settlement financial transactions (e.g. top-ups, drawdowns, funds transfers, FX loads, etc.), as well as the linking of funding accounts (e.g., a currency account) and any rules associated with those funding accounts. Such rules associated with the funding accounts may include funding type (top-up, drawdown, etc.), what time of day to perform funding, the amount of funding, the associated product type (e.g., provide funding for credit card transactions, etc.), override capability, designation of currency type(s), and so forth.

There may also be profile management functions associated with the role within the entity to verify the identification and authority of individuals involved in financial transactions (draw-down, top-ups, funds transfers) or trying to perform a special action (e.g. changing of funding account data, etc.). These profile management functions may provide individuals carrying out this role to perform commercially reasonable security procedures, such as the linkage of digital signatures, corporate resolutions, and double custody.

There may also be profile management functions associated with the role within the entity for reporting, which may include the ability to define, access and distribute electronic and hardcopy reports. This includes the configuration of reporting endpoints (internal and external), ad-hoc reports, analytics, and assignment of data classification and rules to ensure compliance (e.g., to ensure reports/data with confidential data are appropriately labeled, data requiring special handling is stored in encrypted format and not delivered over unsecured channels, and so forth).

Some examples of treasury management functions that can be performed using the data access and security framework include functions associated with reporting, which may include providing reports/data associated with user accounts in the pool (e.g. Bank A's $3M) and the pool account (e.g., pool account 310). There may also be aggregation of user accounts for a central bank, settlement agent, transaction processor, or on-behalf of financial service provider.

There may also be treasury management functions associated with forecasting to allow users or custodians of currency accounts to track and forecast their accounts. This may include importing and exporting historical and intraday account balances, along with ability to 'memo post' expected balance/transaction data. Memo data would be similar to a scratchpad area and expire at a pre-designated time. There may also be treasury management functions associated with the movement of funds and performing the settlement of financial transactions (e.g. top-ups, drawdowns, funds transfers, FX loads, etc.) associated with those accounts. For instance, there may be functions associated with FX loads that allow for the capture of the FX rates used in the settlement of financial transactions and/or individual payment transactions. The main ledger manager may be able to restrict which entities are able view/add/change this data, and the data may be updated frequently at ascheduled time or ad-hoc (assigned at the time of one or more settlement funding transactions).

In some embodiments, the main ledger manager may be able to configure different rules and settings associated with the real-time payments settlement system for various groups of users. For instance, in an embodiment in which pool accounts are associated with different countries, the main ledger manager can configure, at a country level (e.g., for each pool account and its associated users), the settlement timing for individual transactions based upon a variety of parameters, such as payment type, participating users, day of the week of the transaction, and so forth. For example, the main ledger manager could configure all Visa Debit transactions in the US to settle every 10 minutes while having all Visa Direct transactions in Canada to settle in real-time. Furthermore, the main ledger manager may be able to configure different rules and settings to be applied to cross-pool (e.g., cross-border) and multi-currency transactions.

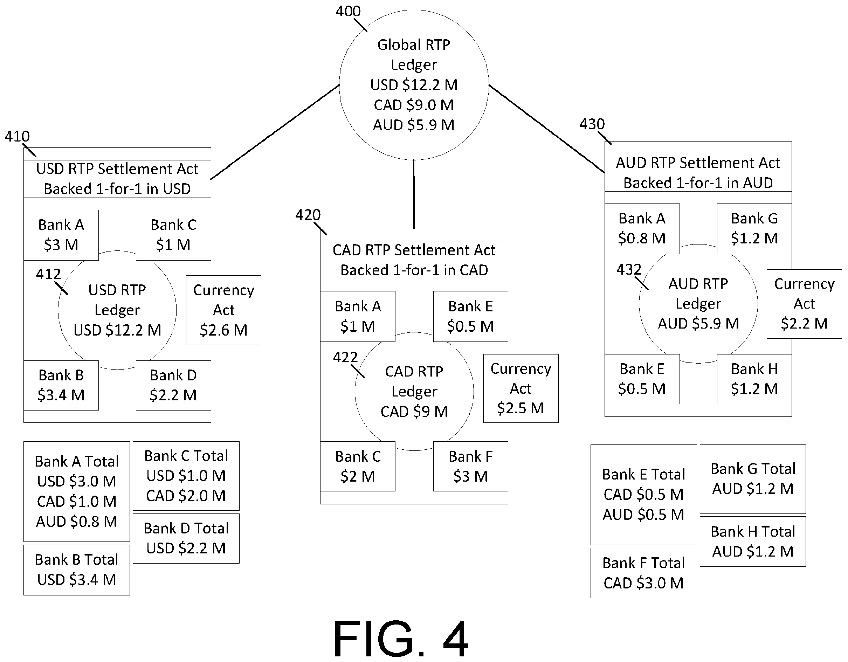

Finally, it should be noted that these processes described in FIG. 3 (for domestic payments or cross-border, cross-pool transactions), as well as the settlement process involving currency accounts discussed in FIG. 4, are also applicable for any customers (e.g., individuals) of the users wishing to make a transaction. For instance, Sam may perform banking with Bank A in the U.S. and wish to make a $500 transfer to his friend Joe, who performs banking with Bank C in the U.S. Sam may log on to Bank A's online portal and initiate this transaction. Bank A may authenticate Sam and debit Sam's bank account for $500 for the transfer. Bank A may also send a transaction request to transfer $500 to Joe's account at Bank C. This transaction request can be sent to the ledger manager of ledger 312 and/or the pool entity of pool account 310 (e.g., to later involve the ledger manager of ledger 312). Or, in the case where Bank A has direct access to the ledger 312 and there is not a single ledger manager of ledger 312 (e.g., if the ledger 312 is implemented using distributed blockchain technology and Bank A operates a node of the ledger 312), then Bank A could even submit the transaction request to the ledger 312.

Generally, the ledger manager of ledger 312 may verify and check the transaction against the rules and configurations of ledger 312 that have been established for at the global level, the country level, for the sending user, and for the receiving user. These rules and configurations can be set within the ledger 312 or the framework used to access the ledger 312, so the verification can be automated and efficient. For instance, the ledger manager may determine if Bank A has sufficient funds in the pool account 310 to cover the transaction. The ledger manager may also determine if the transaction is within transaction size limits that have been established at the global level, at the country level (e.g., for U.S. transactions), for Bank A, and for Bank C. In some embodiments, the ledger manager may check to see if the transaction has an acceptable KYC payment transaction risk score, as assigned by either Bank A or the ledger manager.

If the transaction passes these rules, then the ledger manager may inform Bank C of the funds transfer and Bank C would make the $500 available to Joe in his account with Bank C. The ledger manager may have the ledger 312 record the transaction as a $500 debit to Bank A's settlement account balance within pool account 310 and a $500 credit to Bank C's settlement account balance within pool account 310.

The ledgers are blockchain ledgers that are hosted by a plurality of nodes. For example, in a first transaction from a first user (e.g., Bank A) to a second user (e.g., Bank C) of a first set of users that have all deposited funds for settlement into a first pool account (e.g., pool account 310), a node of a first plurality of nodes (e.g., associated with the ledger manager) hosting a first blockchain ledger (e.g., ledger 312) may receive the transaction. The first blockchain ledger records transactions between these first set of users, and would also be tasked with recording this first transaction which may be for a first amount (e.g., $1 M). The node may then verify that the transaction is capable of taking place by checking the first blockchain ledger. The node may update the first blockchain ledger with the first transaction to include a block with data relating to the first transaction. In some cases, the first blockchain ledger may record, for each transaction between the first set of users, a payer, a payee, and a transaction amount.

Verifying the transaction (e.g., by the node) includes checking the first blockchain ledger (e.g., ledger 312) for a history of transactions associated with the first user (e.g., Bank A) or checking an account value associated with the first user. In some cases, the node of the first plurality of nodes may determine that the transaction reduces an account value associated with the first user (e.g., Bank A's balance) below a first threshold and send a communication to the first user to deposit additional funds into the pool account (e.g., pool account 310). Or the node of the first plurality of nodes may determine that the transaction increases an account value associated with the second user above a second threshold and send a communication to the second user (e.g., Bank C) to withdraw funds from the pool account (e.g., pool account 310).

In some embodiments, the node of the first plurality of nodes (e.g., associated with the ledger manager) hosting the first blockchain ledger (e.g., ledger 312) may receive a second transaction between the first user (e.g., Bank A) and a third user (e.g., Bank E) that did not deposit funds for settlement into the first pool account (e.g., pool account 310). The node may also verify that this second transaction is capable of taking place by checking the first blockchain ledger and then communicate to a second plurality of nodes hosting a second blockchain ledger (e.g., ledger 322), the second transaction.

In a cross-pool transaction, the main ledger manager may receive a transaction between a first user (e.g., Bank A) that deposited funds for settlement into a first pool account (e.g., pool account 310) to a second user (e.g., Bank E) that deposited funds for settlement into a second pool account (e.g., pool account 320), for a first amount. The main ledger manager may verify that the transaction is capable of taking place by checking an account value associated with the first user at the first pool account, and send to a first plurality of nodes hosting a first blockchain ledger (e.g., ledger 312) that records transactions between users that deposited funds for settlement into the first pool account (e.g., pool account 310), a first communication. The first communication may instruct the first plurality of nodes to update the first blockchain ledger to include a decrease in the account value associated with the first user at the first pool account by the first amount. The main ledger manager may also send to a second plurality of nodes hosting a second blockchain ledger (e.g., ledger 322) that records transactions between users that deposited funds for settlement into the second pool account (e.g., pool account 320), a second communication. The second communication may instruct the second plurality of nodes to update the second blockchain ledger to include an increase in an account value associated with the second user at the second pool account.

In some embodiments, the main ledger manager may determine a currency associated with the second pool account (e.g., CAD) and convert the first amount into a second amount based on the determined currency, with the second communication instructing the second plurality of nodes to update the second blockchain ledger (e.g., ledger 322) to include the increase in the account value associated with the second user (e.g., Bank E) at the second pool account by the second amount.

In some embodiments, which involve a currency account as described in FIG. 4, the first communication may instruct the first plurality of nodes to update the first blockchain ledger (e.g., ledger 412) to include a corresponding increase in a currency account value at the first pool account by the first amount. In some cases, the second communication may instruct the second plurality of nodes to update the second blockchain ledger (e.g., ledger 422) to include a corresponding decrease in a currency account value at the second pool account by the second amount. From the perspective of the custodians of these currency accounts, the custodian may receiving communication that the currency account value at the first pool account (e.g., pool account 410) is above a first threshold and withdraw funds from the currency account at the first pool account to bring the currency account value below the first threshold. Or the custodian may receive a communication that the currency account value at the second pool account (e.g., pool account 420) is below a second threshold and deposit funds into the currency account at the second pool account to bring the currency account value above the second threshold.

FIG. 4 illustrates an example implementation for the distributed ledger settlement system, in accordance with embodiments of the present disclosure.

Similarly to FIG. 3, this figure also depicts an example embodiments in which the division of the ledgers is based on various countries and currencies. However, FIG. 4 illustrates how cross-border, multi-currency transactions may also be settled through the use of pre-funded currency accounts within each pool account. Still, the discussion of features associated with the embodiments of FIG. 4 should be assumed to be applicable to the RTP settlement system depicted in FIG. 3 unless otherwise noted.

The pool accounts 410, 420, and 430 are associated with USD, CAD, and AUD, respectively. Pool account 410 is associated with ledger 412 for recording transactions, account values, and the pool value (e.g., the total value of the pool account 310). Pool account 420 is associated with ledger 422 and pool account 430 is associated with ledger 432.

Various users (e.g., Bank A, Bank B, Bank C, and Bank D, and so forth) may deposit funds with each pool account maintained by a pool entity. For example, pool account 410 has deposits from Bank A, B, C, and D in USD that amount to $3 M, $3.4 M, $1 M, and $2.2, respectively. There is also a currency account within pool account 410, in which the custodian of the currency account has deposited $2.6 M. Pool account 420 has deposits from Bank A, C, E, and F in CAD that amount to $1 M , $2 M, $0.5 M, and $3 M, respectively. There is also a currency account within pool account 420, in which the custodian of the currency account has deposited $2.5 M. Pool account 430 has deposits from Bank A, E, G, and H in AUD that amount to $0.8 M , $0.5 M, $1.2 M, and $1.2 M, respectively. There is also a currency account within pool account 430, in which the custodian of the currency account has deposited $2.2 M. In some embodiments, the custodian for all three currency accounts may be the same entity.

As before, for each pool account, the corresponding ledger may continually record individual account values associated with each user (including the currency account) based on their deposits, any previous deposits, as well as any transactions that user may have made. The funds deposited by the users in a pool account are aggregated, but the corresponding ledger would still track each user's account balance as if those users had deposited funds into their own respective accounts provided by the pool entity.

The pool value for each pool account will typically not change as transactions are conducted between only users associated with that pool account. For example, Bank A and Bank C are both users that have deposited into pool account 410. If Bank A and Bank C enter into a transaction that results in a net transfer of $1M USD from Bank A to Bank C, then ledger 412 would be updated to record that transaction and the new individual account values for Bank A and Bank C. Bank A's account value maintained by the ledger 412 would reduce by $1M USD to become $2M USD, while Bank C's account value maintained by the ledger 312 would increase by $1M USD to become $2M USD. The pool value of the pool account 410 maintained by the ledger 412 would remain at $12.2M since the transaction involved a movement of funds that could be settled without additional deposits needing to be made.

The pool value would only change when its users deposit or withdraw funds from that pool account, or when its users enter into transactions with users in another pool. Cross-pool transactions would involve the main ledger 400, which is maintained by a main ledger manager to implement global or multicurrency transactions. The main ledger 400 may be used to record transactions, account values, and/or pool values across multiple ledgers (and in this instance, multiple currencies). For example, the main ledger 400 may maintain records of the total account values of the pool account 410, the pool account 420, and the pool account 430. Although the main ledger 400 could also maintain records of individual account values associated with each user for those pool accounts (e.g., Bank A's account value at pool account 410), it is not absolutely necessary to facilitate transactions between users of different pool accounts because the main ledger 400 could always request confirmation from the ledger of pool account with the payor that the payor has enough funds in their account. Furthermore, for data access and security reasons, users may wish to hide their individual account balances from the main ledger 400 and the main ledger manager.

For instance, Bank D in the U.S. may wish to send $2M USD from their balance in pool account 410 to Bank F in Canada, which has funds in pool account 420. Bank A would send instructions to the main ledger manager maintaining the main ledger 400. The main ledger manager may first check and verify the $2M USD transfer against any rules that have been configured with the ledgers of those pool accounts (e.g., ledger 412 for the pool account 410 and the ledger 422 for the pool account 420). In some embodiments, the main ledger manager may directly communicate (or even indirectly, via the main ledger 400) with those ledgers to check and verify the transaction.

For example, the main ledger manager may communicate with ledger 422 to determine if Bank D already has a CAD RTP settlement account in pool account 420, and if it has sufficient balance for the transaction. In the figure shown, Bank D does not have a CAD RTP settlement account in pool account 420. However, if Bank D did have an account with sufficient balance in pool account 420, then a cross-pool transaction may not even be necessary. The main ledger manager may go back to Bank D to determine which settlement account to use for the transaction or to verify that Bank D does indeed want to perform a cross-pool, cross-border transaction using their settlement account in pool account 410. More typically, the main ledger manager may communicate with ledger 412 to determine if Bank D has a sufficient balance in pool account 410 in order to perform the transfer. In this case, Bank D has $2.2 M in pool account 410, which is sufficient to cover the $2.0 M transfer.

In some embodiments, the main ledger manager may convert the transaction amount into CAD, such as by using the current FX conversion rate for USD to CAD. For instance, if the USD/CAD FX rate is $0.78, the main ledger manager would determine that the $2 M USD transfer is an equivalent of $1.56 M CAD, which is how much that Bank F would receive. The main ledger manager may also determine if the transaction is within transaction size limits that have been established at the global level (e.g., by consulting main ledger 400), at the originating country level (e.g., by consulting ledger 410), at the receiving country level (e.g., by consulting ledger 420), by the payor user (e.g., by consulting Bank D's rules established with ledger 410), or by the receiving user (e.g., by consulting Bank F's rules established with ledger 420). In some embodiments, the rules and transaction limits established at ledger 420 may be involve amounts in CAD, so the main ledger manager would perform the verifications using the $1.56 M CAD equivalent. In some embodiments, the main ledger manager may check to see if the transaction has an acceptable KYC payment transaction risk score, as assigned by either Bank D or the main ledger manager. In some embodiments, the main ledger manager may also check to see if the transaction complies with legal and regulatory requirements for cross-border transactions.

In some embodiments, in which settlement is performed using currency accounts, the main ledger manager may also check to see if the currency account at the pool account of the receiving user has enough funds to cover the transaction. In this case, the currency account at pool account 420 has $2.5 M CAD, which is enough to cover the transaction.

If the transaction passes all these verifications, then the main ledger manager may settle the transaction using the currency accounts associated with the pool accounts 410 and 420. In other words, the system is performing real-time clearing and settlement, and when a transaction is authorized then that transaction is settled on a per-transaction basis. For example, the main ledger manager can send a communication to the ledger manager of ledger 422 (or one of the nodes hosting the ledger) to have $1.56 M CAD transferred from the currency account balance in pool account 420 to Bank F's balance in pool account 420. Either the main ledger manager, or the ledger manager of ledger 422, can then inform Bank F that the transfer has completed and disbursed. The main ledger manager can also send a communication to the ledger manager of ledger 412 to have $2 M USD transferred from Bank D's settlement account balance in pool account 410 to the currency account in pool account 410. The resulting balances will include Bank D having $0.2 M USD in pool account 410, the currency account having $4.6 M USD in pool account 410, Bank F having $4.56 CAD in pool account 420, and the currency account having $0.94 M CAD in pool account 420. The pool values of pool account 410 and pool account 420 have not changed.

In some embodiments, the users and/or custodians of the currency accounts in each pool account may have established certain scripts, rules, or configurations to automate certain features or perform certain actions. These scripts and rules may be associated with top-up/drawdown. For instance, the custodians of the currency accounts in pool account 410 and pool account 420 may have established certain rules or configurations with ledgers 412 and 422, respectively. For example, there may be pre-established thresholds for top-up/drawdown associated with those currency accounts. If the currency account falls below a pre-designated threshold or is expected to fall below a threshold based upon a FX position forecast (e.g., there is expected to be numerous, larger-than-normal transactions made during an upcoming weekend or holiday), the ledger manager of the ledger may send a communication to the custodian of that currency account to add additional funds (e.g., top-up) to the currency account. In some cases, the custodian of the currency account may have established a source of funding and the top-up can be performed automatically. This process would be similar for drawdowns. If the currency account exceeds a pre-designated threshold or is expected to exceed a threshold based upon a FX position forecast, the ledger manager of the ledger may send a communication to the custodian of that currency account to withdraw funds (e.g., drawdown) from the currency account, or the drawdown can be performed automatically if there is an established account to withdraw funds to. The depositing or withdrawing of funds to a currency account will change the pool value of the pool account which will be recorded in the ledger of that pool account, and in some embodiments, will also be communicated to the main ledger manager to be recorded in the main ledger 400.

For example, the custodian of the currency account in pool account 420 may have established a rule with ledger 422 to generate an alert whenever the currency account balance drops below $1 M. Since the currency account in pool account 420 ends up with $0.94 M CAD, this alert can be generated and sent to the custodian (e.g., an individual in the Treasury Management department of the custodian receives an email). The custodian can then initiate a deposit of funds to the pool account 420 to bring their account balance above the threshold, such as by making a transfer from their account at the central bank (not shown) to the currency account in pool account 420. Once the transfer is complete, the ledger manager of ledger 422 can be informed to record the deposit and update the custodian's currency account balance in the pool.

In some embodiments, some or all of the information with these account balance changes may be recorded in the main ledger 400. For instance, in some embodiments, the main ledger 400 may capture an updated account balance for both the payor user and the payee user with the transaction applied (unless the main ledger is not permitted visibility for individual user account balances) or at least an identification of the payor user and the payee user. In this case, the payor is Bank D and the payee is Bank F. Additional information recorded may include the pool accounts associated with the payor user and the payee user, the transaction amount, currency information associated with the transaction (e.g., USD/CAD at an exchange rate of $0.78), any information about why the transaction was declined if it was declined during the settlement process, jurisdiction information for the payor user and the payee user, and a date and time stamp for the transaction. Also recorded may be information associated with the subsequent withdrawals and deposits by the custodians of the currency accounts at pool account 410 and pool account 420, such as identification of the currency account, the transaction type, and the change in pool values associated with pool account 410 and pool account 420.

At the country-level, the ledgers 412 and 422 may also record some or all of this information (e.g., the ledger 412 may record that Bank D made a transfer to Bank F in pool account 420). However, in this case, there has not actually been a direct transfer between Bank D and Bank F. In some embodiments, the ledger 412 may only record that Bank D transferred an amount to the currency account in pool account 410 and any subsequent withdrawals to the currency account that change the pool value of the pool account 410, while the ledger 422 may only record that Bank F received an amount from the currency account in pool account 420 and any subsequent deposits to the currency account that change the pool value of the pool account 420. This would allow the ledgers, at the country-level, to make a record of the transaction without needing to have any knowledge of a payee user in another pool.

There are many advantages to the RTP settlement system, as shown through the embodiments depicted in FIG. 4. One benefit is oversight. The main ledger manager is able to oversee global settlement, and can establish, monitor, and maintain prefunded settlement requirements for users (e.g., banks) - without even needing to have knowledge of the account balances of those users. At the same time, the ledger manager and/or pool entities of a ledger at a country-level can oversee domestic settlement, and can also establish, monitor, and maintain their own prefunded settlement requirements for users of that pool account. There is also greater flexibility and visibility of legal and compliance related business rules and validations, since those rules can be set, configured, or written into the ledgers and/or the framework used to access those ledgers. Legal and regulatory compliance checking against rules and validations can even be automated, along with other back-office functions (such as liquidity management, etc.)

Furthermore, this system can be used to free up funds and collateral for its users. For instance, in a normal day, a bank may make multiple transactions in which they are the payee and also multiple transactions in which they are the payors. Under a typical system, the bank may be expected to pre-fund their account with at least enough to cover the total sum of all the expected transactions in which they are the payors prior to settlement. With the RTP settlement system described herein, a bank would need to deposit a smaller amount and would receive a communication if the account requires a top-up. Similarly, the custodians of the currency accounts would have reduced liquidity requirements as they would also top-up when needed. As a specific example, Bank A may be expected to make a series of sequential ten $1 M transactions to Bank C, totaling $10 M. In a traditional pre-funded system, Bank A would need to prefund their account with at least $10 M to cover the total of these expected transactions, even if some of the transactions do not occur. With the RTP settlement system described herein, in which settlement occurs at the same time a transaction is cleared, Bank A would only need to keep $1 M in their account to perform the first transaction. Once the transaction occurs and the balance dips below a threshold, Bank A would be notified and would deposit additional funds into the pool (or this may be performed automatically based on configurations), such as another $1 M to perform the next transaction. In this specific example, Bank A would only need to keep $1 M in the account at any time. This system also provides settlement finality with each payment, eliminates systemic risk, and provides all participants with greater visibility into individual and overall (e.g., pool account) settlement positions.

Additionally, the system enables the digital ledger to be supported in a centralized or decentralized manner, depending on which approach would be easier to implement. Many of the embodiments discussed have involved a decentralized approach with a hierarchy of distributed ledgers. However, in some embodiments, the roles performed by the main ledger manager, the ledger managers, and/or the custodians of the various currency accounts may be performed by a single entity, which may simplify the process and reduce the amount of communications taking place. Furthermore, if the main ledger manager and the ledger managers are combined into a single entity, then all the ledgers can effectively be combined into a centralized ledger. This can make it easier to implement and establish the system all at once, since there is no longer a need to have many different ledger managers (e.g., for each country). This may also provide consistency in terms of interpreting transactions in the ledger.

Alternatively, the decentralized approach does not require implementation all at once, and allows for implementation on a country-by-country basis. A country could establish their own pool and ledger to enable domestic real-time payments and provide their users the ability to remotely manage their settlement position. Another advantage of a decentralized ledger is that it works well when different rules, permissions, and approvals are expected. For instance, different countries may likely manage their own separate ledgers and pools (e.g., a central bank which can integrate settlements via direct or indirect access). These different ledgers and pools may have their own framework, rules, and controls. At the same time, there may be a need for a universal, global ledger that serves than more than just a database. The main blockchain ledger can be used to facilitate cross-border transactions between users of ledgers that were intended to capture only domestic transactions, while also providing a level of permission-based data visibility and control (e.g., who can see what data, who can use what data) that will be necessary.

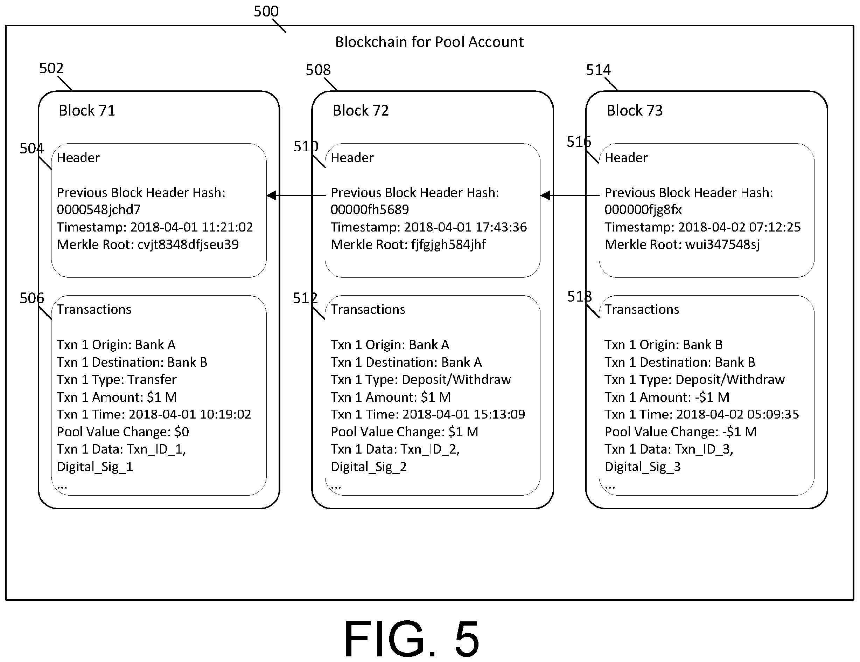

FIG. 5 illustrates an example diagram of blocks in a blockchain ledger for the distributed ledger settlement system, in accordance with embodiments of the present disclosure. In particular, FIG. 5 illustrates a blockchain 500 to demonstrate how the blocks in a blockchain ledger may look like at the country-level (e.g., for the ledgers 312, 322, and 332 in FIG. 3).

Blockchain 500 is shown with three consecutive blocks in an exemplary blockchain, blocks 502, block 508, and block 514. The blockchain 500 may be a data structure that aggregates transactions for inclusion into the blockchain 500. Each block may include a header and a list of one or more transactions, and a block may have multiple transactions. Blocks 502, 508, and 514 are shown with only one transaction each for the purposes of clarity. For example, block 502 may include header 504 and transactions 506. Block 508 may include header 510 and transactions 512. Block 514 may include header 516 and transactions 518.

The headers 504, 510, 516 may include at least three sets of metadata: a previous block header hash, a timestamp, and a merkle root. The previous block header hash may connect each block to the previous block. For example, in header 510 of block 508, "00000fh5689" may be a hash of header 504 of block 502. In other words, a cryptographic hashing algorithm (e.g., SHA256) may be applied any number of times to the header 504 to obtain the value "00000fh5689", which may be included in the header 510 of the block 508. The timestamp may be the creation time of the block. For example, block 508 may have been created on April 1, 2018 at 5:43:36 PM. The merkle root may be a hash of the root of the merkle tree of each block's transactions. A merkle tree may be a summary of all of the transactions in a block that is constructed by hashing pairs of nodes until there is only one hash. The last remaining hash is the merkle root.

The transactions 506, 512, and 518 may incorporate a set of transactions, with certain information associated with each transaction. Transactions 506, 512, 518 may be data structures that encode a transaction from an origin or source (e.g., a payor) and a destination (e.g., a payee). As shown in FIG. 5, there may be no cumulative data maintained by the blockchain 500. Instead, the available data may be scattered amongst a plurality of transactions and a plurality of blocks. For example, the transactions associated with a single user may be recorded to separate blocks throughout the blockchain according to when it was recorded.

For example, transactions 506 may include data associated with a transaction from Bank A to Bank B. The data may include an identifier of the origin (e.g., Bank A) and an identifier of the destination (e.g., Bank B), but does not necessarily need to be in clear text as shown here. For instance, the identifiers may be an address or a unique series of characters that are associated with a particular user. The data may include a transaction type, such as a transfer, deposit, or withdraw. The data may further include a transaction amount and a transaction time, as the header 504 of the block 502 only indicates when the data for the transaction was recorded and not the actual transaction time. The data may also include a change in the pool value, but this can be omitted because the change in the pool value can be inferred from the transaction itself and the current pool value can be determined by reviewing the history of all the transactions recorded in the blockchain. The data may also include transaction identifiers that can be used to search for this specific transaction in the blockchain and also a digital signature, which in some cases, may be used to verify the identity of the originator (e.g., Bank A) and authenticate the transaction. Although not shown, transactions 506 may contain additional data for transactions (which do not have to involve Bank A). Transactions 512 and 518 also contain similar kinds of data associated with other transactions.

In various embodiments, other kinds of information associated with transactions can be stored in the blocks. Some of this data could be encrypted and not available to be viewing without the proper permissions. For example, along with an identifier of the payor and payee, the data may include updated account balances for both the payor user and the payee user with the transaction applied. Also included can be currency information associated with the transaction, any information about why the transaction was declined if it was declined during the settlement process, jurisdiction information for the payor and the payee, and so forth. In some embodiments, the blockchain ledger at the country level may also incorporate data associated with cross-pool transactions. In addition to the kinds of information listed above, there may also be identifiers of the pool accounts associated with the payor user and the payee user.

Implementing a blockchain 500 in lieu of a traditional database in the disclosed embodiments may have many advantages. The blockchain 500 is multi-access and many entities may both have access to the data recorded therein. This may allow for decentralized and/or shared control of the blockchain. Furthermore, the blockchain model has trust and redundancy inherently built into the system. Each participating entity may verify digital signatures for multiple related or unrelated transactions, which allows for transparency associated with the transactions and ecosystem simplification by adding all transactions to a single blockchain. This decentralization also prevents malicious attacks as the blockchain 500 does not have a central point of failure, and data written to the blockchain 500 may be immutable once it is written, reducing the possibility of fraud and errors. The blockchain 500 can also be permission based, such that different data is visible to different entities (and individuals associated with those entities) based on permissions.

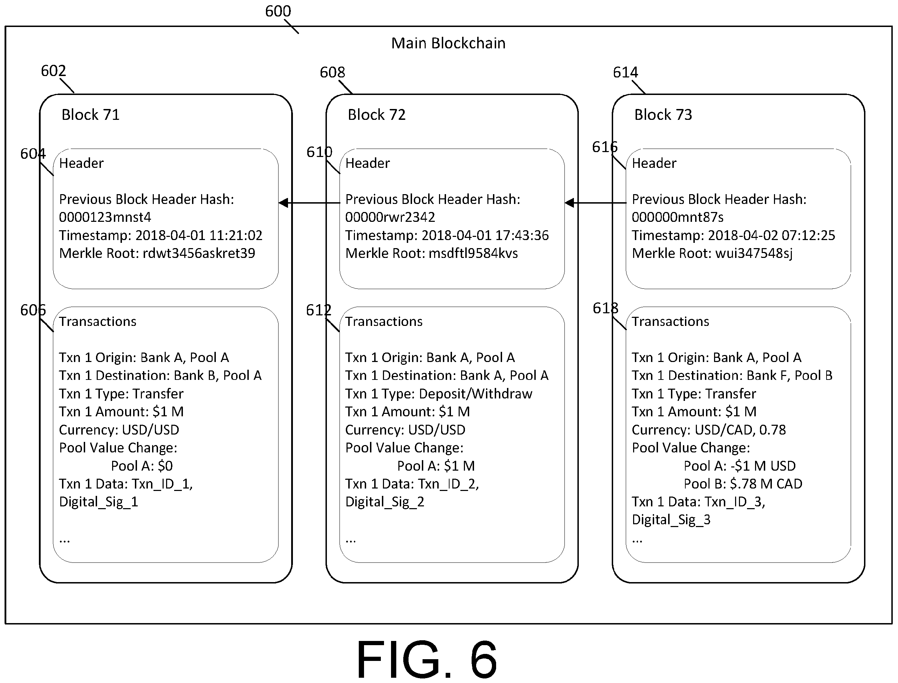

FIG. 6 illustrates an example diagram of blocks in a blockchain ledger for the distributed ledger settlement system, in accordance with embodiments of the present disclosure. In particular, FIG. 6 illustrates a blockchain 600 to demonstrate how the blocks in a blockchain ledger may look like at the global level (e.g., for the main ledger 300 in FIG. 3).

Blockchain 600 is shown with three consecutive blocks in an exemplary blockchain, blocks 602, block 608, and block 614. The blockchain 600 may be a data structure that aggregates transactions for inclusion into the blockchain 600. Each block may include a header and a list of one or more transactions, and a block may have multiple transactions. For example, block 602 may include header 604 and transactions 606. Block 608 may include header 610 and transactions 612. Block 614 may include header 616 and transactions 618.

The headers 604, 610, 616 may include at least three sets of metadata: a previous block header hash, a timestamp, and a merkle root. The previous block header hash may connect each block to the previous block. For example, in header 610 of block 608, "00000rwr2342" may be a hash of header 604 of block 602. A cryptographic hashing algorithm (e.g., SHA256) may be applied any number of times to the header 604 to obtain the value "00000rwr2342", which may be included in the header 610 of the block 608. The timestamp may be the creation time of the block. For example, block 608 may have been created on April 1, 2018 at 5:43:36 PM. The merkle root may be a hash of the root of the merkle tree of each block's transactions. A merkle tree may be a summary of all of the transactions in a block that is constructed by hashing pairs of nodes until there is only one hash. The last remaining hash is the merkle root.

The transactions 606, 612, and 618 may incorporate a set of transactions, with certain information associated with each transaction. Transactions 606, 612, 618 may be data structures that encode a transaction from an origin or source (e.g., a payor) and a destination (e.g., a payee). As shown in FIG. 6, there may be no cumulative data maintained by the blockchain 600. Instead, the available data may be scattered amongst a plurality of transactions and a plurality of blocks. For example, the transactions associated with a single user may be recorded to separate blocks throughout the blockchain according to when it was recorded.

In some embodiments, such as the one depicted in the figure, the transactions recorded in blockchain 600 may include most or all of the information recorded in all of the ledgers at the country-level, such as same-pool transactions, deposits, and withdrawals. Blockchain 600 may also record cross-pool transactions. For example, transactions 606 is shown to include data associated with a same-pool transaction from Bank A to Bank B, which are both users of Pool A. Note that the identifiers of the users and pools do not need to be in clear text as shown here, but may be an address or a unique series of characters that are associated with a particular user and/or pool. This data includes a transaction type (e.g., transfer, deposit, or withdraw), which in this case is a transfer. The data may further include a transaction amount, a transaction time, and changes in pool values. The data may also include currency and jurisdiction information, as well as the exchange rate applied to a transaction. In addition, the data may also include transaction identifiers that can be used to search for this specific transaction in the blockchain and also a digital signature, which in some cases, may be used to verify the identity of the originator (e.g., Bank A) and authenticate the transaction. Transactions 612 and 618 also contain similar kinds of data associated with other transactions. For instance, transactions 612 includes a deposit by Bank A which increases the pool value of Pool A by $1 M. Transactions 618 shows a cross-pool transaction by Bank A in Pool A to Bank F in Pool B, in which a $1 M amount in USD was debited from Bank A and the equivalent amount of $0.78 M CAD (based on an exchange rate of 0.78) was credited to Bank F.

In some other embodiments, the blockchain 600 may optionally record same-pool transactions, optionally record withdrawals and deposits to pool accounts, and optionally record changes in pool value. All of this data can be recorded in the ledgers at the country-level and requested if needed. However, the blockchain 600 may continue to record cross-pool transactions, such as the transaction shown in transactions 618.

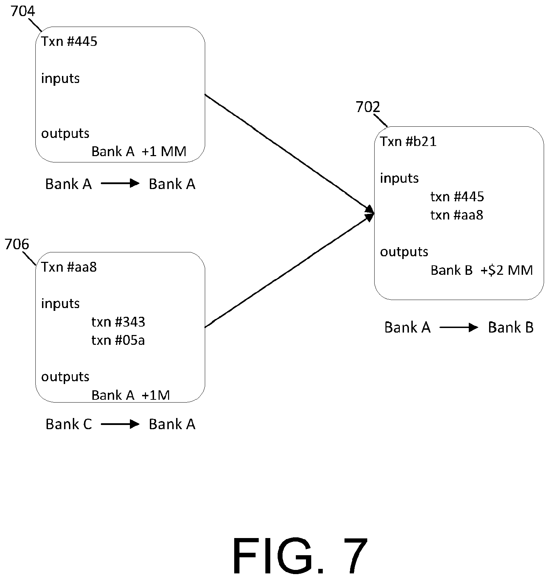

FIG. 7 illustrates an example diagram of how transactions are verified in a distributed ledger settlement system, in accordance with embodiments of the present disclosure.

More specifically, the diagram illustrates how a transaction can be verified to ensure that the account value associated with a payor is sufficient to cover the transaction, based on the history of transactions associated with that user recorded in the blockchain. The individual blocks in the blockchain do not necessarily correspond to a specific user and are not even necessarily in chronological order (blocks are ordered by when they are recorded, but a particular transaction may be recorded in a block at a later time from when the transaction took place). However, to ensure that a transaction is permitted and the funds for the transaction were available and not already spent by the payor (e.g., double spending), the transaction may list a set of input transactions (e.g., previous transactions adding an equivalent amount of funds into the payor's account). This allows the blockchain to provide a history of all of the transactions and can be used to determine the flow of funds over time.

For instance, it can be seen that transaction 702 with a transaction id #b21 involved a transfer of funds from Bank A to Bank B of $2 M. The transaction 702 lists two inputs, transaction id #445 (transaction 704) and transaction #id aa8 (transaction 706). Once a transaction is listed as an input, it is considered spent. Thus, any new transactions being recorded cannot list those two transactions as inputs. Here, transaction 704 involved Bank A depositing $1 M into their account and transaction 706 involved Bank C transferring $1 M into Bank A's account. Thus, there was a flow of funds totaling $2 M into Bank A's account, which is enough to cover this transaction of $2 M from Bank A to Bank B.

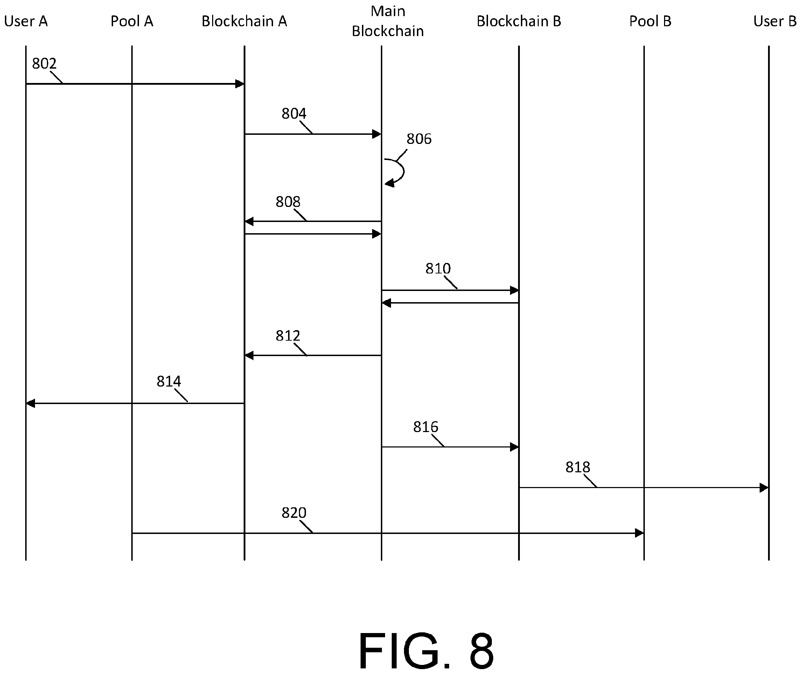

FIG. 8 illustrates a step diagram for an example cross-pool transaction using the distributed ledger settlement system, in accordance with embodiments of the present disclosure.

In FIG. 8, assume that user A of pool A is attempting to make a cross-pool transaction in order to transfer funds to user B of pool B. At step 802, user A may submit the transaction to the ledger manager of blockchain A associated with pool A. The submitted transaction will identify user B, as well as a transaction amount. At step 804, the ledger manager of blockchain A will forward this transaction to the main ledger manager for the main blockchain. In some embodiments, the ledger manager of blockchain A may first determine that this is indeed a cross-pool transaction (e.g., by determining that user B is not in pool A) and also determine that user A has a sufficient balance in pool A to perform the transaction. In other embodiments, the user A of pool A may directly submit the transaction request to the main ledger manager for the main blockchain.

At step 806, the main ledger manager may determine the corresponding amount to transfer to user B (e.g., for a multi-currency transaction) and verify the transaction against the rules established in the main blockchain. For example, if this is a cross-border transaction, the main ledger manager may first check to see if this transaction is permitted based on international rules, rules associated with the originating country, and rules associated with the receiving country. At step 808, the main ledger manager may further verify the transaction against the rules established with blockchain A. For example, a determination may be made is to whether user A has a sufficient balance in pool A for the transaction, or whether the transaction is within transaction limits applicable to either user A or pool A. If the transaction cannot be verified, the main ledger manager would have to decline the transaction and user A would have to be informed of their insufficient balance or that the transaction is above established limits. At step 810, the main ledger manager may also further verify the transaction against the rules established with blockchain B, such as to determine whether the transaction is above established limits applicable to user B or pool B.

If the transaction can be verified, then the main ledger manager of the main blockchain may record the transaction in the main blockchain. Furthermore, at step 812, the main ledger manager may send a communication to the ledger manager of blockchain A to permit and record the transaction. The details of the transaction are recorded in blockchain A with user A's account balance being debited, and at step 814, user A may be informed by the ledger manager of blockchain A that their account balance has been debited. Similarly, at step 816, the main ledger manager may send a communication to the ledger manager of blockchain B to permit and record the transaction. This communication may also include a converted transaction amount based on an exchange rate between currency A associated with pool A and currency B associated with pool B (e.g., for a multi-currency transaction). The details of the transaction are recorded in blockchain B with user B's account balance being credited with the converted amount, and at step 818, user B may be informed by the ledger manager of blockchain B that their account balance has been credited. In some embodiments, at step 820, at a later time, the transaction may be physically settled by having the pool entity of pool A provide the funds to the pool entity of pool B.

**A** computer system may be used to implement any or all of the entities or components described above. The subsystems of the computer system may be interconnected via a system bus. Additional subsystems such as a printer, keyboard, fixed disk (or other memory comprising computer readable media), monitor, which is coupled to display adapter, and others may be used. Peripherals and input/output (I/O) devices, which couple to an I/O controller (which can be a processor or other suitable controller), can be connected to the computer system by any number of means known in the art, such as a serial port. For example, a serial port or external interface can be used to connect the computer apparatus to a wide area network such as the Internet, a mouse input device, or a scanner. The interconnection via system bus allows the central processor to communicate with each subsystem and to control the execution of instructions from system memory or the fixed disk, as well as the exchange of information between subsystems. The system memory and/or the fixed disk may embody a computer readable medium. In some embodiments, the monitor may be a touch sensitive display screen.

A computer system can include a plurality of the same components or subsystems, e.g., connected together by an external interface or by an internal interface. In some embodiments, computer systems, subsystem, or apparatuses can communicate over a network. In such instances, one computer can be considered a client and another computer a server, where each can be part of a same computer system. A client and a server can each include multiple systems, subsystems, or components.

It should be understood that any of the embodiments of the present invention can be implemented in the form of control logic using hardware (e.g. an application specific integrated circuit or field programmable gate array) and/or using computer software with a generally programmable processor in a modular or integrated manner. As used herein, a processor includes a single-core processor, multi-core processor on a same integrated chip, or multiple processing units on a single circuit board or networked. Based on the disclosure and teachings provided herein, a person of ordinary skill in the art will know and appreciate other ways and/or methods to implement embodiments of the present invention using hardware and a combination of hardware and software.

Any of the software components or functions described in this application may be implemented as software code to be executed by a processor using any suitable computer language such as, for example, Java, C, C++, C#, Objective-C, Swift, or scripting language such as Perl or Python using, for example, conventional or object-oriented techniques. The software code may be stored as a series of instructions or commands on a computer readable medium for storage and/or transmission, suitable media include random access memory (RAM), a read only memory (ROM), a magnetic medium such as a hard-drive or a floppy disk, or an optical medium such as a compact disk (CD) or DVD (digital versatile disk), flash memory, and the like. The computer readable medium may be any combination of such storage or transmission devices.

Such programs may also be encoded and transmitted using carrier signals adapted for transmission via wired, optical, and/or wireless networks conforming to a variety of protocols, including the Internet. As such, a computer readable medium according to an embodiment of the present invention may be created using a data signal encoded with such programs. Computer readable media encoded with the program code may be packaged with a compatible device or provided separately from other devices (e.g., via Internet download). Any such computer readable medium may reside on or within a single computer product (e.g. a hard drive, a CD, or an entire computer system), and may be present on or within different computer products within a system or network. A computer system may include a monitor, printer, or other suitable display for providing any of the results mentioned herein to a user.

The above description is illustrative and is not restrictive. Many variations of the invention will become apparent to those skilled in the art upon review of the disclosure. The scope of the invention should, therefore, be determined not with reference to the above description, but instead should be determined with reference to the pending claims along with their full scope.

One or more features from any embodiment may be combined with one or more features of any other embodiment without departing from the scope of the invention.

A recitation of "a", "an" or "the" is intended to mean "one or more" unless specifically indicated to the contrary.

## Claims

1. A method comprising:
receiving, at a node of a first plurality of nodes (204, 214, 224) hosting a first blockchain ledger (202, 212, 222, 312, 322, 332, 412, 422, 432), a first transaction, wherein each user of a first set of users (102, 112, 122) deposited funds for settlement into a first pool account (310, 320, 330, 410, 420, 430) such that the first pool account has a total aggregate value equivalent to a sum of all the deposited funds, wherein the first transaction is from a first user to a second user for a first amount, wherein the first blockchain ledger (202, 212, 222, 312, 322, 332, 412, 422, 432) is a private permission based blockchain ledger that utilizes public-key cryptography for encryption and role-based access control wherein users are provided with public key certificates for accessing permitted data from the blockchain ledger, the first blockchain ledger (202, 212, 222, 312, 322, 332, 412, 422, 432) maintains a record of individual account values associated with each user of the first set of users (102, 112, 122) based on their deposited funds and any previously deposited funds, as well as records transactions between the first set of users including the first user and the second user and updates their individual account values based on the transactions, the deposits and any withdrawals of funds;
verifying, by the node of the first plurality of nodes (204, 214, 224), that the first transaction is capable of taking place by checking the first blockchain ledger (202, 212, 222, 312, 322, 332, 412, 422, 432) for a history of transactions associated with the first user or checking an account value associated with the first user; and
updating, by the node of the first plurality of nodes (204, 214, 224), the first blockchain ledger (202, 212, 222, 312, 322, 332, 412, 422, 432) with the first transaction to include a block with data relating to the first transaction, wherein based on the determination that the transaction is capable of taking place, the total aggregate value of the first pool account is maintained in the first blockchain ledger and movement of funds for the first transaction is settled without an additional deposit to the first pool account needing to be made.

2. The method of claim 1, wherein the first blockchain ledger (202, 212, 222, 312, 322, 332, 412, 422, 432) further records, for each transaction between the first set of users:
a payer;
a payee; and
a transaction amount.

3. The method of any preceding claim, further comprising:
receiving, at the node of the first plurality of nodes (204, 214, 224), a second transaction between the first user to a third user that did not deposit funds for settlement into the first pool account;
verifying, by the node of the first plurality of nodes (204, 214, 224), that the second transaction is capable of taking place by checking the first blockchain ledger (202, 212, 222, 312, 322, 332, 412, 422, 432); and
communicating, by the node of the first plurality of nodes (204, 214, 224) to a second plurality of nodes hosting a second blockchain ledger, the second transaction.

4. The method of claim 3, wherein the second transaction is from the first user to the third user for a second amount and wherein the second blockchain ledger records transactions between users that deposited funds for settlement into a second pool account, including the third user;
the method further comprising:
updating the first blockchain ledger (202, 212, 222, 312, 322, 332, 412, 422, 432) by decreasing the account value associated with the first user at the first pool account by the second amount;
instructing the second plurality of nodes to update the second blockchain ledger by increasing an account value associated with the third user at the second pool account by the second amount.

5. The method of any preceding claim, further comprising:
determining, by the node of the first plurality of nodes (204, 214, 224), that the first transaction reduces an account value associated with the first user below a first threshold; and
sending, by the node of the first plurality of nodes (204, 214, 224), a communication to the first user to deposit additional funds into the first pool account (310, 320, 330, 410, 420, 430).

6. The method of any preceding claim, further comprising:
determining, by the node of the first plurality of nodes (204, 214, 224), that the first transaction increases an account value associated with the second user above a second threshold; and
sending, by the node of the first plurality of nodes (204, 214, 224), a communication to the second user to withdraw funds from the first pool account (310, 320, 330, 410, 420, 430).

7. A computing system comprising:
a plurality of nodes (204, 214, 224) hosting a first blockchain ledger (202, 212, 222, 312, 322, 332, 412, 422, 432), each node comprising:
a processor;
a computer-readable memory containing program instructions that, when executed by the processor, cause the processor to:
receive, a first transaction from a first user to a second user for a first amount, wherein the first user and the second user have deposited funds for settlement into a first pool account (310, 320, 330, 410, 420, 430) such that the first pool account has a total aggregate value equivalent to a sum of all the deposited funds;
verify that the first transaction is capable of taking place by checking the first blockchain ledger (202, 212, 222, 312, 322, 332, 412, 422, 432) for a history of transactions associated with the first user or checking an account value associated with the first user, wherein the first blockchain ledger (202, 212, 222, 312, 322, 332, 412, 422, 432) is a private permission based blockchain ledger that utilizes public-key cryptography for encryption and role-based access control wherein users are provided with public key certificates for accessing permitted data from the blockchain ledger, the first blockchain ledger (202, 212, 222, 312, 322, 332, 412, 422, 432) maintains a record of individual account values associated with the first user and the second user based on their deposited funds and any previously deposited funds, as well as records transactions between a first set of users including the first user and the second user; and
update the first blockchain ledger (202, 212, 222, 312, 322, 332, 412, 422, 432) with the first transaction to include a block with data relating to the first transaction, wherein based on the determination that the transaction is capable
of taking place, the total aggregate value of the first pool account is maintained in the first blockchain ledger (202, 212, 222, 312, 322, 332, 412, 422, 432) and movement of funds for the first transaction is settled without an additional deposit to the first pool account needing to be made.

8. The computing system of claim 7, wherein the first blockchain ledger (202, 212, 222, 312, 322, 332, 412, 422, 432) further records, for each transaction between the first set of users:
a payer;
a payee; and
a transaction amount.

9. The computing system of any of claims 7 or 8, wherein the program instructions, when executed by the processor, further cause the processor to:
receive a second transaction between the first user to a third user that did not deposit funds for settlement into the first pool account (310, 320, 330, 410, 420, 430);
verify that the second transaction is capable of taking place by checking the first blockchain ledger (202, 212, 222, 312, 322, 332, 412, 422, 432); and
communicate the second transaction to a second plurality of nodes hosting a second blockchain ledger.

10. The computing system of any of claims 7 to 9, wherein the program instructions, when executed by the processor, further cause the processor to:
determine that the first transaction reduces an account value associated with the first user below a first threshold; and
sending a communication to the first user to deposit additional funds into the first pool account (310, 320, 330, 410, 420, 430).

11. The computing system of any of claims 7 to 10, wherein the program instructions, when executed by the processor, further cause the processor to:
determine that the first transaction increases an account value associated with the second user above a second threshold; and
send a communication to the second user to withdraw funds from the first pool account (310, 320, 330, 410, 420, 430).

## Patentansprüche

1. Verfahren, Folgendes umfassend:
Empfangen, an einem Knoten einer ersten Vielzahl von Knoten (204, 214, 224), die einen ersten Blockchain-Ledger (202, 212, 222, 312, 322, 332, 412, 422, 432) hosten, einer ersten Transaktion, wobei jeder Benutzer einer ersten Benutzergruppe (102, 112, 122) Einzahlungen zur Abwicklung in ein erstes Pool-Konto (310, 320, 330, 410, 420, 430) getätigt hat, sodass das erste Pool-Konto einen Gesamtwert hat, der einer Summe aller eingezahlten Geldmittel entspricht, wobei die erste Transaktion von einem ersten Benutzer an einen zweiten Benutzer für einen ersten Betrag erfolgt, wobei der erste Blockchain-Ledger (202, 212, 222, 312, 322, 332, 412, 422, 432) ein auf privater Berechtigung basierender Blockchain-Ledger ist, der Public-Key-Kryptografie für die Verschlüsselung und rollenbasierte Zugriffskontrolle verwendet, wobei Benutzern Public-Key-Zertifikate für den Zugriff auf die zulässigen Daten vom Blockchain-Ledger bereitgestellt werden, wobei der erste Blockchain-Ledger (202, 212, 222, 312, 322, 332, 412, 422, 432) eine Aufzeichnung individueller Kontowerte, die jedem Benutzer der ersten Benutzergruppe (102, 112, 122) basierend auf ihren Einzahlungen und allen zuvor getätigten Einzahlungen zugeordnet sind, führt, sowie Transaktionen innerhalb der ersten Benutzergruppe, einschließlich des ersten Benutzers und des zweiten Benutzers, aufzeichnet und ihre individuellen Kontowerte basierend auf den Transaktionen, den Einzahlungen und jeglichen Abhebungen von Geldmitteln aktualisiert;
Verifizieren, durch den Knoten der ersten Vielzahl von Knoten (204, 214, 224), dass die erste Transaktion erfolgen kann, durch Prüfen des ersten Blockchain-Ledgers (202, 212, 222, 312, 322, 332, 412, 422, 432) auf einen Transaktionsverlauf, der dem ersten Benutzer zugeordnet ist, oder Prüfen eines Kontowerts, der dem ersten Benutzer zugeordnet ist; und
Aktualisieren, durch den Knoten der ersten Vielzahl von Knoten (204, 214, 224), des ersten Blockchain-Ledgers (202, 212, 222, 312, 322, 332, 412, 422, 432) mit der ersten Transaktion, sodass er einen Block mit Daten enthält, die sich auf die erste Transaktion beziehen, wobei, basierend auf dem Ermitteln, dass die Transaktion erfolgen kann, der Gesamtwert des ersten Pool-Kontos in dem ersten Blockchain-Ledger aufrechterhalten wird und die Bewegung von Geldmitteln für die erste Transaktion abgewickelt wird, ohne dass eine zusätzliche Einzahlung in das erste Pool-Konto vorgenommen werden muss.

2. Verfahren nach Anspruch 1, wobei der erste Blockchain-Ledger (202, 212, 222, 312, 322, 332, 412, 422, 432) ferner für jede Transaktion innerhalb der ersten Benutzergruppe Folgendes aufzeichnet:
einen Zahler;
einen Zahlungsempfänger; und
einen Transaktionsbetrag.

3. Verfahren nach einem der vorhergehenden Ansprüche, ferner Folgendes umfassend:
Empfangen, an dem Knoten der ersten Vielzahl von Knoten (204, 214, 224), einer zweiten Transaktion von dem ersten Benutzer an einen dritten Benutzer, der keine Einzahlungen zur Abwicklung in das erste Pool-Konto getätigt hat;
Verifizieren, durch den Knoten der ersten Vielzahl von Knoten (204, 214, 224), dass die zweite Transaktion erfolgen kann, durch Prüfen des ersten Blockchain-Ledgers (202, 212, 222, 312, 322, 332, 412, 422, 432); und
Übermitteln, durch den Knoten der ersten Vielzahl von Knoten (204, 214, 224) an eine zweite Vielzahl von Knoten, die einen zweiten Blockchain-Ledger hosten, der zweiten Transaktion.

4. Verfahren nach Anspruch 3, wobei die zweite Transaktion von dem ersten Benutzer an den dritten Benutzer für einen zweiten Betrag erfolgt, und wobei der zweite Blockchain-Ledger Transaktionen zwischen Benutzern, einschließlich des dritten Benutzers, aufzeichnet, die Einzahlungen zur Abwicklung in einen zweiten Pool-Konto getätigt haben;
wobei das Verfahren ferner Folgendes umfasst:
Aktualisieren des ersten Blockchain-Ledgers (202, 212, 222, 312, 322, 332, 412, 422, 432) durch Verringern des Kontowerts, der dem ersten Benutzer bei dem ersten Pool-Konto zugeordnet ist, um den zweiten Betrag;
Anweisen der zweiten Vielzahl von Knoten, den zweiten Blockchain-Ledger durch Erhöhen eines Kontowerts, der dem dritten Benutzer zugeordnet ist, bei dem zweiten Pool-Konto um den zweiten Betrag zu aktualisieren.

5. Verfahren nach einem der vorhergehenden Ansprüche, ferner Folgendes umfassend:
Ermitteln, durch den Knoten der ersten Vielzahl von Knoten (204, 214, 224), dass die erste Transaktion einen Kontowert, der dem ersten Benutzer zugeordnet ist, unter einen ersten Schwellenwert herabsetzt; und
das Senden, durch den Knoten der ersten Vielzahl von Knoten (204, 214, 224), einer Mitteilung an den ersten Benutzer, zusätzliche Geldmittel in das erste Pool-Konto (310, 320, 330, 410, 420, 430) einzuzahlen.

6. Verfahren nach einem der vorhergehenden Ansprüche, ferner Folgendes umfassend:
Ermitteln, durch den Knoten der ersten Vielzahl von Knoten (204, 214, 224), dass die erste Transaktion einen Kontowert, der dem zweiten Benutzer zugeordnet ist, über einen zweiten Schwellenwert heraufsetzt; und
Senden, durch den Knoten der ersten Vielzahl von Knoten (204, 214, 224), einer Mitteilung an den zweiten Benutzer, zusätzliche Geldmittel von dem ersten Pool-Konto (310, 320, 330, 410, 420, 430) abzuheben.

7. Computersystem, Folgendes umfassend:
eine Vielzahl von Knoten (204, 214, 224), die einen ersten Blockchain-Ledger (202, 212, 222, 312, 322, 332, 412, 422, 432) hosten, wobei jeder Knoten Folgendes umfasst:
einen Prozessor;
einen computerlesbaren Speicher, der Programmbefehle enthält, die bei Ausführung durch den Prozessor den Prozessor dazu veranlassen:
eine erste Transaktion für einen ersten Betrag von einem ersten Benutzer an einen zweiten Benutzer zu empfangen, wobei der erste Benutzer und der zweite Benutzer Einzahlungen zur Abwicklung in ein erstes Pool-Konto (310, 320, 330, 410, 420, 430) getätigt haben, sodass das erste Pool-Konto einen Gesamtwert hat, der einer Summe aller Einzahlungen entspricht;
zu verifizieren, dass die erste Transaktion erfolgen kann, durch Prüfen des ersten Blockchain-Ledgers (202, 212, 222, 312, 322, 332, 412, 422, 432) auf einen Transaktionsverlauf, der dem ersten Benutzer zugeordnet ist, oder das Überprüfen eines Kontowerts, der dem ersten Benutzer zugeordnet ist, wobei der erste Blockchain-Ledger (202, 212, 222, 312, 322, 332, 412, 422, 432) ein auf privater Berechtigung basierender Blockchain-Ledger ist, der Public-Key-Kryptografie für die Verschlüsselung und rollenbasierte Zugriffskontrolle verwendet, wobei Benutzern Public-Key-Zertifikate für den Zugriff auf die zulässigen Daten von dem Blockchain-Ledger bereitgestellt werden, wobei der erste Blockchain-Ledger (202, 212, 222, 312, 322, 332, 412, 422, 432) eine Aufzeichnung von individuellen Kontowerten, die dem ersten Benutzer und dem zweiten Benutzer zugeordnet sind, basierend auf ihren Einzahlungen und allen zuvor getätigten Einzahlungen führt, sowie Transaktionen innerhalb einer ersten Benutzergruppe, einschließlich dem ersten Benutzer und dem zweiten Benutzer, aufzeichnet; und
den ersten Blockchain-Ledger (202, 212, 222, 312, 322, 332, 412, 422, 432) mit der ersten Transaktion zu aktualisieren, sodass er einen Block mit Daten enthält, die sich auf die erste Transaktion beziehen, wobei, basierend auf dem Ermitteln, dass die Transaktion erfolgen kann, der Gesamtwert des ersten Pool-Kontos in dem ersten Blockchain-Ledger (202, 212, 222, 312, 322, 332, 412, 422, 432) aufrechterhalten wird und die Bewegung von Geldmitteln für die erste Transaktion abgewickelt wird, ohne dass eine zusätzliche Einzahlung in das erste Pool-Konto vorgenommen werden muss.

8. Computersystem nach Anspruch 7, wobei der erste Blockchain-Ledger (202, 212, 222, 312, 322, 332, 412, 422, 432) ferner für jede Transaktion innerhalb der ersten Benutzergruppe Folgendes aufzeichnet:
einen Zahler;
einen Zahlungsempfänger; und
einen Transaktionsbetrag.

9. Computersystem nach Anspruch 7 oder 8, wobei die Programmanweisungen bei Ausführung durch den Prozessor den Prozessor ferner zu Folgendem veranlassen:
Empfangen einer zweiten Transaktion von dem ersten Benutzer an einen dritten Benutzer, der keine Einzahlungen zur Abwicklung in das erste Pool-Konto (310, 320, 330, 410, 420, 430) getätigt hat;
Verifizieren, dass die zweite Transaktion erfolgen kann, durch Prüfen des ersten Blockchain-Ledgers (202, 212, 222, 312, 322, 332, 412, 422, 432); und
Übermitteln der zweiten Transaktion an eine zweite Vielzahl von Knoten, die einen zweiten Blockchain-Ledger hosten.

10. Computersystem nach Anspruch 7 bis 9, wobei die Programmanweisungen bei Ausführung durch den Prozessor den Prozessor ferner zu Folgendem veranlassen:
Ermitteln, dass die erste Transaktion einen Kontowert, der dem ersten Benutzer zugeordnet ist, unter einen ersten Schwellenwert herabsetzt; und
Senden einer Mitteilung an den ersten Benutzer, zusätzliche Geldmittel in das erste Pool-Konto (310, 320, 330, 410, 420, 430) einzuzahlen.

11. Computersystem nach Anspruch 7 bis 10, wobei die Programmanweisungen bei Ausführung durch den Prozessor den Prozessor ferner zu Folgendem veranlassen:
Ermitteln, dass die erste Transaktion einen Kontowert, der dem zweiten Benutzer zugeordnet ist, über einen zweiten Schwellenwert heraufsetzt; und
Senden einer Mitteilung an den zweiten Benutzer, Geldmittel von dem ersten Pool-Konto (310, 320, 330, 410, 420, 430) abzuheben.

## Revendications

1. Procédé comprenant :
la réception, au niveau d'un noeud d'une première pluralité de noeuds (204, 214, 224) hébergeant un premier registre de chaîne de blocs (202, 212, 222, 312, 322, 332, 412, 422, 432), d'une première transaction, dans lequel chaque utilisateur d'un premier ensemble d'utilisateurs (102, 112, 122) a déposé des fonds pour un règlement sur un premier compte de mise en commun (310, 320, 330, 410, 420, 430) de telle sorte que le premier compte de mise en commun a une valeur agrégée totale équivalente à une somme de tous les fonds déposés, dans lequel la première transaction est d'un premier utilisateur à un deuxième utilisateur pour un premier montant, dans lequel le premier registre de chaîne de blocs (202, 212, 222, 312, 322, 332, 412, 422, 432) est un registre de chaîne de blocs basé sur une autorisation privée qui utilise une cryptographie à clé publique pour le chiffrement et une commande d'accès basée sur le rôle dans lequel des utilisateurs sont munis de certificats de clé publique pour accéder à des données autorisées à partir du registre de chaîne de blocs, le premier registre de chaîne de blocs (202, 212, 222, 312, 322, 332, 412, 422, 432) conserve un enregistrement de valeurs de compte individuelles associées à chaque utilisateur du premier ensemble d'utilisateurs (102, 112, 122) sur la base de leurs fonds déposés et de tout fonds déposé précédemment et enregistre des transactions entre le premier ensemble d'utilisateurs comportant le premier utilisateur et le deuxième utilisateur et met à jour leurs valeurs de compte individuelles sur la base des transactions, des dépôts et de tout retrait de fonds ;
la vérification, par le noeud de la première pluralité de noeuds (204, 214, 224), du fait que la première transaction est capable d'avoir lieu par contrôle dans le premier registre de chaîne de blocs (202, 212, 222, 312, 322, 332, 412, 422, 432) d'un historique de transactions associées au premier utilisateur ou contrôle d'une valeur de compte associée au premier utilisateur ; et
la mise à jour, par le noeud de la première pluralité de noeuds (204, 214, 224), du premier registre de chaîne de blocs (202, 212, 222, 312, 322, 332, 412, 422, 432) avec la première transaction pour inclure un bloc avec des données relatives à la première transaction, dans lequel sur la base de la détermination du fait que la transaction est capable d'avoir lieu, la valeur agrégée totale du premier compte de mise en commun est conservée dans le premier registre de chaîne de blocs et un mouvement de fonds pour la première transaction est réglé sans nécessiter de dépôt supplémentaire sur le premier compte de mise en commun.

2. Procédé selon la revendication 1, dans lequel le premier registre de chaîne de blocs (202, 212, 222, 312, 322, 332, 412, 422, 432) enregistre en outre, pour chaque transaction entre le premier ensemble d'utilisateurs :
un payeur ;
un bénéficiaire ; et
un montant de transaction.

3. Procédé selon l'une quelconque des revendications précédentes, comprenant en outre :
la réception, au niveau du noeud de la première pluralité de noeuds (204, 214, 224), d'une deuxième transaction entre le premier utilisateur et un troisième utilisateur qui n'a pas déposé de fonds pour un règlement sur le premier compte de mise en commun ;
la vérification, par le noeud de la première pluralité de noeuds (204, 214, 224), du fait que la deuxième transaction est capable d'avoir lieu par contrôle du premier registre de chaîne de blocs (202, 212, 222, 312, 322, 332, 412, 422, 432) ; et
la communication, par le noeud de la première pluralité de noeuds (204, 214, 224) à une deuxième pluralité de noeuds hébergeant un deuxième registre de chaîne de blocs, de la deuxième transaction.

4. Procédé selon la revendication 3, dans lequel la deuxième transaction est du premier utilisateur au troisième utilisateur pour un deuxième montant et dans lequel le deuxième registre de chaîne de blocs enregistre des transactions entre des utilisateurs qui ont déposé des fonds pour un règlement sur un deuxième compte de mise en commun, comportant le troisième utilisateur ;
le procédé comprenant en outre :
la mise à jour du premier registre de chaîne de blocs (202, 212, 222, 312, 322, 332, 412, 422, 432) par diminution de la valeur de compte associée au premier utilisateur au niveau du premier compte de mise en commun à hauteur du deuxième montant ;
l'instruction à la deuxième pluralité de noeuds de mettre à jour le deuxième registre de chaîne de blocs par augmentation d'une valeur de compte associée au troisième utilisateur au niveau du deuxième compte de mise en commun à hauteur du deuxième montant.

5. Procédé selon l'une quelconque des revendications précédentes, comprenant en outre :
la détermination, par le noeud de la première pluralité de noeuds (204, 214, 224), du fait que la première transaction réduit une valeur de compte associée au premier utilisateur en dessous d'un premier seuil ; et
l'envoi, par le noeud de la première pluralité de noeuds (204, 214, 224), d'une communication au premier utilisateur pour déposer des fonds supplémentaires sur le premier compte de mise en commun (310, 320, 330, 410, 420, 430).

6. Procédé selon l'une quelconque des revendications précédentes, comprenant en outre :
la détermination, par le noeud de la première pluralité de noeuds (204, 214, 224), du fait que la première transaction augmente une valeur de compte associée au deuxième utilisateur au-dessus d'un deuxième seuil ; et
l'envoi, par le noeud de la première pluralité de noeuds (204, 214, 224), d'une communication au deuxième utilisateur pour retirer des fonds du premier compte de mise en commun (310, 320, 330, 410, 420, 430).

7. Système informatique comprenant :
une pluralité de noeuds (204, 214, 224) hébergeant un premier registre de chaîne de blocs (202, 212, 222, 312, 322, 332, 412, 422, 432), chaque noeud comprenant :
un processeur ;
une mémoire lisible par ordinateur contenant des instructions de programme qui, lorsqu'elles sont exécutées par le processeur, amènent le processeur à :
recevoir, une première transaction d'un premier utilisateur à un deuxième utilisateur pour un premier montant, dans lequel le premier utilisateur et le deuxième utilisateur ont déposé des fonds pour un règlement sur un premier compte de mise en commun (310, 320, 330, 410, 420, 430) de telle sorte que le premier compte de mise en commun a une valeur agrégée totale équivalente à une somme de tous les fonds déposés ;
vérifier que la première transaction est capable d'avoir lieu par contrôle dans le premier registre de chaîne de blocs (202, 212, 222, 312, 322, 332, 412, 422, 432) d'un historique de transactions associées au premier utilisateur ou contrôle d'une valeur de compte associée au premier utilisateur, dans lequel le premier registre de chaîne de blocs (202, 212, 222, 312, 322, 332, 412, 422, 432) est un registre de chaîne de blocs basé sur une autorisation privée qui utilise une cryptographie à clé publique pour le chiffrement et une commande d'accès basée sur le rôle dans lequel des utilisateurs sont munis de certificats de clé publique pour accéder à des données autorisées à partir du registre de chaîne de blocs, le premier registre de chaîne de blocs (202, 212, 222, 312, 322, 332, 412, 422, 432) conserve un enregistrement de valeurs de compte individuelles associées au premier utilisateur et au deuxième utilisateur sur la base de leurs fonds déposés et de tout fonds déposé précédemment, et enregistre des transactions entre un premier ensemble d'utilisateurs comportant le premier utilisateur et le deuxième utilisateur ; et
mettre à jour le premier registre de chaîne de blocs (202, 212, 222, 312, 322, 332, 412, 422, 432) avec la première transaction pour inclure un bloc avec des données relatives à la première transaction, dans lequel sur la base de la détermination du fait que la transaction est capable d'avoir lieu, la valeur agrégée totale du premier compte de mise en commun est conservée dans le premier registre de chaîne de blocs (202, 212, 222, 312, 322, 332, 412, 422, 432) et un mouvement de fonds pour la première transaction est réglé sans nécessiter de dépôt supplémentaire sur le premier compte de mise en commun.

8. Système informatique selon la revendication 7, dans lequel le premier registre de chaîne de blocs (202, 212, 222, 312, 322, 332, 412, 422, 432) enregistre en outre, pour chaque transaction entre le premier ensemble d'utilisateurs :
un payeur ;
un bénéficiaire ; et
un montant de transaction.

9. Système informatique selon l'une quelconque des revendications 7 ou 8, dans lequel les instructions de programme, lorsqu'elles sont exécutées par le processeur, amènent en outre le processeur à :
recevoir une deuxième transaction entre le premier utilisateur et un troisième utilisateur qui n'a pas déposé de fonds pour un règlement sur le premier compte de mise en commun (310, 320, 330, 410, 420, 430) ;
vérifier que la deuxième transaction est capable d'avoir lieu par contrôle du premier registre de chaîne de blocs (202, 212, 222, 312, 322, 332, 412, 422, 432) ; et
communiquer la deuxième transaction à une deuxième pluralité de noeuds hébergeant un deuxième registre de chaîne de blocs.

10. Système informatique selon l'une quelconque des revendications 7 à 9, dans lequel les instructions de programme, lorsqu'elles sont exécutées par le processeur, amènent en outre le processeur à :
déterminer que la première transaction réduit une valeur de compte associée au premier utilisateur en dessous d'un premier seuil ; et
envoyer une communication au premier utilisateur pour déposer des fonds supplémentaires sur le premier compte de mise en commun (310, 320, 330, 410, 420, 430).

11. Système informatique selon l'une quelconque des revendications 7 à 10, dans lequel les instructions de programme, lorsqu'elles sont exécutées par le processeur, amènent en outre le processeur à :
déterminer que la première transaction augmente une valeur de compte associée au deuxième utilisateur au-dessus d'un deuxième seuil ; et
envoyer une communication au deuxième utilisateur pour retirer des fonds du premier compte de mise en commun (310, 320, 330, 410, 420, 430).
